# EUROPEAN PATENT APPLICATION

(11) **EP 4 811 498 A1**
(43) Date of publication of application: **23.09.2026**
(21) Application number: 24923231.5
(22) Date of filing: 02.08.2024
(51) Int. Cl.: H01M 10/6556

(54) **HEAT EXCHANGE TUBE, BATTERY, AND ELECTRIC APPARATUS**

(30) Priority: 06.02.2024 CN 202420285873 U
(71) Applicant: Contemporary Amperex Technology Co., Limited, Ningde, Fujian 352100 (CN)
(72) Inventor: SONG, Feiting, Ningde, Fujian 352100 (CN); WU, Qiaoyun, Ningde, Fujian 352100 (CN)
(74) Representative: Lorenz Seidler Gossel Part. mbB
(86) International application number: PCT/CN2024/109646
(87) International publication number: WO 2025/167018

(57) **Abstract**

A heat exchange tube (10), a battery (1000), and an electric apparatus. The heat exchange tube (10) comprises a plurality of heat exchange sections (101), the plurality of heat exchange sections (101) are separately formed, and the plurality of heat exchange sections (101) are sequentially spliced and communicated; and each heat exchange section (101) comprises a bent section (12) and straight section (11), two straight sections (11) of any two adjacent heat exchange sections (101) are connected by means of a lap joint structure (13), the lap joint structure (13) comprises a first insertion portion (131) and a second insertion portion (132), and the first insertion portion (131) is inserted into the second insertion portion (132) and is connected to the second insertion portion (132).

## Description

### CROSS-REFERENCE TO RELATED APPLICATIONS

The present application claims priority to Chinese Patent Application No. "202420285873.0" filed on February 6, 2024, which is filed by Contemporary Amperex Technology Co., Ltd., and the entire content of which is incorporated herein by reference.

### TECHNICAL FIELD

The present application relates to the field of battery technologies, and in particular, to a heat exchange tube, a battery, and an electric apparatus.

### BACKGROUND

Battery cells inside a battery need to be within a certain temperature range during operation. When the temperature in the battery exceeds or is lower than this range, both stability and performance of the battery will be significantly affected. A heat exchange tube can be configured to exchange heat with the battery cells, so that the battery can be within a proper temperature range. A bent path of the heat exchange tube affects the heat exchange area and temperature distribution between the heat exchange tube and a component to be heat-exchanged.

In some related technologies, an extension path of the heat exchange tube is too complex, resulting in relatively significant forming difficulty and interference.

### SUMMARY

Embodiments of the present application provide a heat exchange tube, a battery, and an electric apparatus, which can reduce forming difficulty of the heat exchange tube to satisfy requirements of the battery and the electric apparatus for a relatively large heat exchange area and a complex heat exchange path.

According to a first aspect, an embodiment of the present application provides a heat exchange tube comprising a plurality of heat exchange sections. The plurality of heat exchange sections are separately formed, and the plurality of heat exchange sections are sequentially spliced and communicated. Each heat exchange section comprises a bent section and a straight section, two straight sections of any two adjacent heat exchange sections are connected by means of a lap joint structure, the lap joint structure comprises a first insertion portion and a second insertion portion, and the first insertion portion is inserted into the second insertion portion and is connected to the second insertion portion.

In the foregoing technical solution, the plurality of heat exchange sections are separately formed and sequentially spliced and communicated, so that the bent section and the straight section of each heat exchange section are not interfered with by other heat exchange sections in a forming procedure, which reduces forming difficulty and helps to improve production efficiency. In addition, there is no need to increase the spacing between the plurality of heat exchange sections of the heat exchange tube to avoid interference in the forming procedure. Therefore, within a certain space range, the heat exchange tube can be arranged more densely, which helps to increase the heat exchange area, and an extension path of the heat exchange tube from an inlet to an outlet can also be more flexible and varied, which helps to satisfy temperature regulation requirements of different temperature field distributions. Moreover, splicing of the plurality of heat exchange sections is implemented by means of the lap joint structure, and the insertion connection manner is more convenient for assembly. Positioning between the plurality of heat exchange sections is precise, and there is no need to provide other communication and mating members, which helps to reduce costs.

In some embodiments, in the two straight sections connected by means of the lap joint structure, an end portion of one straight section is formed into the first insertion portion, and an end portion of the other straight section is formed into the second insertion portion.

In the foregoing technical solution, two heat exchange sections are directly inserted and connected by means of straight sections, which can not only decrease an insertion gap and reduce a risk of leakage, but also reduce an insertion working procedure and improve splicing efficiency.

In some embodiments, the inner peripheral surface of the first insertion portion is coplanar with the inner peripheral surface of a connected heat exchange section, the second insertion portion is formed into a flared section, and the size of the inner peripheral surface of the second insertion portion is greater than the size of the inner peripheral surface of the connected heat exchange section.

In the foregoing technical solution, the first insertion portion is inserted into the flared section, so that the heat exchange section connected to the flared section can limit the insertion depth of the first insertion portion, thereby preventing the insertion depth of the first insertion portion from being too large and affecting an extension length of the heat exchange tube. In addition, the inner peripheral surface of the first insertion portion is coplanar with the inner peripheral surface of the connected heat exchange section, so that the first insertion portion is less likely to cause an increase in flow resistance in the connected heat exchange section. If the size of the inner peripheral surface of the flared section is relatively large, influence on flow resistance in the connected heat exchange section after the first insertion portion is inserted can be reduced, thereby reducing the overall flow resistance of the heat exchange tube.

In some embodiments, the first insertion portion is formed into a constricted section, and the size of the outer peripheral surface of the first insertion portion is less than the size of the outer peripheral surface of a connected heat exchange section, and the outer peripheral surface of the second insertion portion is coplanar with the outer peripheral surface of the connected heat exchange section.

In the foregoing technical solution, the constricted section is inserted into the second insertion portion, so that the heat exchange section connected to the constricted section can mate with the second insertion portion to implement insertion limit, thereby preventing the insertion depth of the first insertion portion from being too large and affecting an extension length of the heat exchange tube. In addition, the outer peripheral surface of the second insertion portion is coplanar with the outer peripheral surface of the connected heat exchange section, which helps to improve flatness of the outer surface of the heat exchange tube, so that the outer surface of the heat exchange tube can be in full contact with a component to be heat-exchanged for heat exchange, thereby reducing thermal resistance and improving heat exchange efficiency.

In some embodiments, the heat exchange tube further comprises a connecting joint, and two ends of the connecting joint are respectively connected to end portions of two straight sections of two adjacent heat exchange sections by means of lap joint structures. One of an end portion of the connecting joint and an end portion of the straight section is formed into the first insertion portion, and the other is formed into the second insertion portion.

In the foregoing technical solution, compared with the heat exchange section, the connecting joint has a shorter extension length, is easier to form, and has a more flexible structural arrangement. Therefore, indirect connection between two heat exchange sections is implemented by means of the connecting joint. A sealing structure may be provided on the connecting joint, for example, a solder layer is provided, which can be directly heated up and welded after inserting the connecting joint into the heat exchange section to achieve sealing. However, the heat exchange section does not need to be provided with a sealing structure such as a solder layer, and the structure of the heat exchange section is simple. For example, the heat exchange section can be extruded from a single material to form, without being limited by the fact that the heat exchange section cannot be extruded from a composite material to form, which helps to reduce forming difficulty of the heat exchange section and improve production efficiency. In addition, extrusion forming makes sealing performance of the heat exchange section more reliable.

In some embodiments, in the lap joint structure connecting the straight section and the connecting joint, the first insertion portion is formed into a constricted section and/or the second insertion portion is formed into a flared section.

In the foregoing technical solution, by providing at least one of the constricted section and the flared section, insertion limit of the lap joint structure can be implemented, so that the insertion depth is less likely to be too large and to affect the extension length of the heat exchange tube. In addition, the first insertion portion is formed into a constricted section, which facilitates a relatively smooth transition between the outer peripheral surface of the straight section and the outer peripheral surface of the connecting joint after the second insertion portion is inserted. This helps to improve flatness of the outer surface of the heat exchange tube, so that the outer surface of the heat exchange tube can be in full contact with a component to be heat-exchanged for heat exchange, thereby reducing thermal resistance and improving heat exchange efficiency. The second insertion portion is formed into a flared section, and after the first insertion portion is inserted into the flared section, it helps to make transition between the inner peripheral surface of the straight section and the inner peripheral surface of the connecting joint relatively smooth, thereby reducing influence of the lap joint on flow resistance, thereby reducing the overall flow resistance of the heat exchange tube.

In some embodiments, the outer peripheral surface of one of the straight section and the connecting joint is coplanar with the outer peripheral surface of a connected first insertion portion, and the inner peripheral surface of the other is coplanar with the inner peripheral surface of a connected second insertion portion.

In the foregoing technical solution end portions of the straight section and the connecting joint do not need to be flared and constricted, and the connecting joint is directly sleeved on the straight section or inserted into the straight section to achieve insertion, which helps to reduce an assembly working procedure and improve production efficiency.

In some embodiments, the outer peripheral surface of the first insertion portion is connected to the inner peripheral surface of the second insertion portion.

In the foregoing technical solution, the connection area between the first insertion portion and the second insertion portion is relatively large, which helps to improve connection reliability and sealing reliability.

In some embodiments, the first insertion portion and the second insertion portion are connected by means of welding.

In the foregoing technical solution, the connection manner is simple and firm, and has good sealing performance.

In some embodiments, each of the heat exchange sections is integrally formed from a single tube; and/or the heat exchange tube is a flat tube.

In the foregoing technical solution, an assembly working procedure between the straight section and the bent section is eliminated, production efficiency is improved, and splicing and sealing are not required, which helps to reduce a risk of sealing failure.

In some embodiments, the heat exchange section comprises one bent section and two straight sections, and the two straight sections are respectively connected to two ends of the bent section.

In the foregoing technical solution, the heat exchange section is generally formed into a U-shaped, V-shaped or L-shaped structure, the quantity of bent sections comprised in the heat exchange section is smaller, the forming difficulty of the heat exchange section is lower. In addition, the heat exchange section can be spliced with other heat exchange sections by means of the straight sections at two ends, splicing is easier, and a problem of sealing failure at a splice is less likely to occur.

In some embodiments, the two straight sections of the heat exchange section extend in a first direction and are arranged in a second direction, the first direction and the second direction are disposed at an included angle, and in two connected heat exchange sections, one straight section of one heat exchange section is opposite to and connected to one straight section of the other heat exchange section in the first direction.

In the foregoing technical solution, the heat exchange tube is formed into a serpentine tube extending back and forth in the first direction, which has a better effect of increasing the heat exchange area, and makes it easier to splice the plurality of heat exchange sections.

In some embodiments, lengths of two straight sections located at two ends of a splicing path are greater than the length of an intermediate straight section, the two straight sections are parallel to each other and respectively have an inlet and an outlet of the heat exchange tube, and the inlet and the outlet are located at the same end of the two straight sections in the length direction.

In the foregoing technical solution, the lengths of the straight sections at two ends are greater than the length of the intermediate straight section, so that the straight sections at two ends can be close to the edge of the heat exchange tube in the length direction, which facilitates connection to an external flow path.

In some embodiments, the heat exchange tube comprises a plurality of straight sections and at least one bent section that are sequentially communicated, the straight sections extend in a first direction and the plurality of straight sections are arranged at intervals in a second direction, the first direction and the second direction are disposed at an included angle, and the at least one bent section is sequentially connected to and communicated with the plurality of straight sections.

In the foregoing technical solution, by connecting the bent section to the straight section, the direction of the extension path of the heat exchange tube from the inlet to the outlet can be reversed. The heat exchange tube is formed into a serpentine structure, which helps to enable the heat exchange tube to cover a larger area within a certain space range, thereby increasing the heat exchange area with the component to be heat-exchanged, increasing heat exchange efficiency, and improving temperature uniformity of the component to be heat-exchanged.

In some embodiments, the bent section comprises an arc-shaped section and an inclined section, the inclined section is connected to the arc-shaped section and one of two adjacent straight sections, and the inclined section is away from the arc-shaped section in the first direction and is inclined toward a direction close to the other of the two adjacent straight sections.

In the foregoing technical solution, the inclined section can reduce the spacing between two straight sections in the second direction, so that the spacing between the two straight sections is less than the bent diameter of the inner edge of the arc-shaped section. Therefore, the spacing between any two straight sections connected by means of the bent section is reduced, and the space occupied by all straight sections of the heat exchange tube in the second direction is reduced. In other words, in the case that a required heat exchange range in the second direction is fixed, more straight sections can be arranged, thereby increasing a heat exchange area within a certain space range, and improving heat exchange effect and heat exchange uniformity of different regions of the component to be heat-exchanged.

In some embodiments, the bent section comprises one arc-shaped section and one inclined section, one end of the inclined section is connected to one end of the arc-shaped section, and the other end of the inclined section and the other end of the arc-shaped section are respectively connected to two adjacent straight sections.

In the foregoing technical solution, the arc-shaped section extends along an arc, the inclined section can extend along a straight line, the arc-shaped section and the inclined section need a change in a bending manner in a forming procedure. The bent section comprises one inclined section, so that the quantity of bending manner switches in a bending forming procedure can be reduced, so as to improve production efficiency and reduce forming difficulty.

In some embodiments, the bent section comprises one arc-shaped section and two inclined sections, and the two inclined sections are respectively connected to two ends of the arc-shaped section and two adjacent straight sections.

In the foregoing technical solution, the effect of reducing an arrangement spacing of the straight sections is better, and in the case that a requirement for reducing the spacing is fixed, the angle of inclination required by each inclined section is smaller, which helps to reduce forming difficulty.

In some embodiments, the bent diameter of the inner edge of the bent section is D, and the width of the straight section in the second direction is L, wherein the spacing between two straight sections of the same heat exchange section in the second direction is 60%D to 70%D; and/or two straight sections of the heat exchange section are a first straight section and a second straight section, and in two adjacent heat exchange sections, the first straight section of one heat exchange section and the second straight section of the other heat exchange section are opposite in the first direction and connected by means of the lap joint structure, the second straight section of one heat exchange section and the first straight section of the other heat exchange section are respectively located on two sides of the lap joint structure in the second direction, and the spacing between the first straight section and the second straight section located on the two sides of the lap joint structure is 60% (2D + L) to 70% (2D + L).

In the foregoing technical solution, the space occupied by the two straight sections of the heat exchange section in the second direction can be effectively reduced, and the overall space occupied by connected heat exchange sections in the second direction can also be reduced, so that the effect of increasing the heat exchange area is better, and the inclination angle of the inclined section is proper, which facilitates separate forming of the heat exchange section.

In some embodiments, the heat exchange tube comprises a first heat exchange tube, the first heat exchange tube comprises a first heat exchange flow channel and a second heat exchange flow channel, the second heat exchange flow channel is bent to form a U-shaped region, and the first heat exchange flow channel is bent and disposed in the U-shaped region, and is bent and connected to the second heat exchange flow channel.

In the foregoing technical solution, the second heat exchange flow channel is bent to form the U-shaped region, and the first heat exchange flow channel is bent and disposed in the U-shaped region. When the heat exchange tube exchanges heat with a battery assembly, the U-shaped region formed by the second heat exchange flow channel on the periphery can be opposite to peripheral battery cells of the battery, and the first heat exchange flow channel in the U-shaped region can be opposite to internal battery cells, so that the heat exchange tube can compensate for an internal and external temperature difference caused by heat exchange between the peripheral battery cells and the environment to make heat exchange effects of the peripheral battery cells of the battery assembly and the internal battery cells of the battery assembly tend to be the same, improving temperature equalization of the battery, thereby improving a service life of the battery to some extent.

In some embodiments, the first heat exchange flow channel comprises a plurality of first heat exchange portions, and the plurality of first heat exchange portions are arranged at intervals and are sequentially bent and connected.

In the foregoing technical solution, in one aspect, by providing a plurality of first heat exchange portions, the heat exchange area of the first heat exchange flow channel can be increased, and then the heat exchange area of the first heat exchange tube can be increased, thereby improving heat exchange effect of the first heat exchange tube; and in the other aspect, the internal battery cells are wrapped by the external battery cells, and the temperature difference between the internal battery cells is not large. Therefore, through arrangement of the plurality of first heat exchange portions, overall heat exchange effect can be improved on the premise of reducing the temperature difference between internal and external battery cells.

In some embodiments, the second heat exchange flow channel comprises: a second heat exchange portion, a third heat exchange portion, and a fourth heat exchange portion, wherein the second heat exchange portion extends along a first side peripheral edge of the first heat exchange flow channel, the third heat exchange portion is connected between the second heat exchange portion and the first heat exchange flow channel and extends along a second side peripheral edge of the first heat exchange flow channel, a first end of the third heat exchange portion is connected to the second heat exchange portion at an included angle and a second end of the third heat exchange portion is connected to the first heat exchange flow channel at an included angle, and the fourth heat exchange portion is communicated with the second heat exchange portion, is connected to the second heat exchange portion at an included angle, and extends along a third side peripheral edge of the first heat exchange flow channel.

In the foregoing technical solution, by respectively arranging the second heat exchange portion, the third heat exchange portion, and the fourth heat exchange portion on three sides of the first heat exchange flow channel, the second heat exchange flow channel can surround the first heat exchange flow channel, thereby increasing compactness of arrangement of the first heat exchange tube, achieving miniaturization of the structure of the first heat exchange tube, and further facilitating improvement of the volumetric energy density of the battery. In addition, the structure of the first heat exchange tube can be simplified, and processing and production of the heat exchange tube can be facilitated.

In some embodiments, the first heat exchange tube further comprises a third heat exchange flow channel, the first heat exchange flow channel is connected between the third heat exchange flow channel and the second heat exchange flow channel, and the third heat exchange flow channel is connected to the first heat exchange flow channel at an included angle.

In the foregoing technical solution, by providing the third heat exchange flow channel, the heat exchange area of the first heat exchange tube can be further increased, and then the heat exchange effect of the first heat exchange tube can be further improved.

In some embodiments, the first heat exchange flow channel comprises a plurality of first heat exchange portions, the plurality of first heat exchange portions are sequentially bent and connected in the second direction, the third heat exchange flow channel is arranged on a side that is of the first heat exchange flow channel and that faces away from the third heat exchange portion, the third heat exchange flow channel is connected to one of the plurality of first heat exchange portions that is closest to the second heat exchange portion in the second direction, the third heat exchange flow channel extends toward a direction away from the second heat exchange portion in the second direction, the first heat exchange portion extends in the first direction, and the first direction and the second direction are disposed at an included angle.

In the foregoing technical solution, by additionally providing the third heat exchange flow channel and connecting the third heat exchange flow channel to one of the plurality of first heat exchange portions that is closest to the second heat exchange portion in the second direction Y, the heat exchange area can be increased, a temperature difference of the battery assembly can be balanced, and then temperature equalization of the battery assembly can be improved.

According to a second aspect, an embodiment of the present application further provides a battery, comprising the foregoing heat exchange tube.

In some embodiments, the battery comprises a plurality of heat exchange tubes, wherein the plurality of heat exchange tubes are arranged at intervals or arranged in a surrounding manner with each other in a second direction, at least one heat exchange tube is a first heat exchange tube, the first heat exchange tube comprises a first heat exchange flow channel and a second heat exchange flow channel, the second heat exchange flow channel is bent to form a U-shaped region, the first heat exchange flow channel is bent and disposed in the U-shaped region and is bent and connected to the second heat exchange flow channel, and the plurality of heat exchange tubes are arranged in parallel.

In the foregoing technical solution, by providing one or more heat exchange tubes and arranging the plurality of heat exchange tubes at intervals or in a surrounding manner with each other in the second direction Y, diversity of the heat exchange tubes can be increased, and then adaptability of the heat exchange tubes can be improved, so that requirements of different batteries can be satisfied, and market competitiveness of the batteries can be enhanced. In addition, the plurality of heat exchange tubes are arranged in parallel, so that the plurality of heat exchange tubes can exchange heat simultaneously, thereby reducing heat exchange time of the heat exchange tube and improving heat exchange efficiency.

In some embodiments, the battery further comprises: a box assembly and a battery assembly, wherein the box assembly comprises a box body integrally formed by means of stamping, the box body comprises a bottom wall and a surrounding wall, the battery assembly is disposed in the box body, and the battery assembly comprises a plurality of battery cells.

In the foregoing technical solution, because the bottom wall and the surrounding wall of the box body are integrally formed by means of stamping, sealing effect can be improved without considering sealing at the connection of the bottom wall and the surrounding wall, thereby preventing muddy water from seeping into the box body from the connection of the bottom wall and the surrounding wall and affecting the battery assembly, thereby improving reliability of the battery. Moreover, the box body integrally formed by means of stamping does not need to be spliced, which can improve production efficiency.

In some embodiments, the battery comprises a temperature-regulating member, the temperature-regulating member comprises at least one of a first temperature-regulating member, a second temperature-regulating member, and a third temperature-regulating member, and the at least one of the first temperature-regulating member, the second temperature-regulating member, and the third temperature-regulating member forms the heat exchange tube, wherein the first temperature-regulating member is disposed outside the box body and is in close contact with an outer wall of the box body; the second temperature-regulating member is disposed inside the box assembly and is located between the battery assembly and the box assembly; and the third temperature-regulating member is disposed inside the box assembly and is located between two adjacent battery cells.

In the foregoing technical solution, the battery cells can generate heat during working, or the battery cells need to be heated in a low temperature environment to make the battery cells within an appropriate temperature range. By providing the temperature-regulating member, temperature regulation of the battery cells can be achieved, stability of the battery cells is improved, and endurance capability of the battery is enhanced.

According to a third aspect, an embodiment of the present application further provides an electric apparatus, comprising the foregoing battery.

### BRIEF DESCRIPTION OF THE DRAWINGS

FIG. 1 is a schematic diagram of a vehicle according to an embodiment of the present application;
FIG. 2 is an exploded view of a battery according to some embodiments of the present application;
FIG. 3 and FIG. 4 are schematic diagrams of a structure of a heat exchange tube according to some embodiments of the present application;
FIG. 5 is a schematic diagram of a structure of a heat exchange tube according to some other embodiments of the present application;
FIG. 6 is a partial schematic diagram of a lap joint structure according to an embodiment of the present application;
FIG. 7 is a cross-sectional view of the lap joint structure in the direction indicated by line A-A in FIG. 4 according to a first embodiment of the present application;
FIG. 8 is a cross-sectional view of a lap joint structure according to a second embodiment of the present application;
FIG. 9 is a cross-sectional view of a lap joint structure according to a third embodiment of the present application;
FIG. 10 is a cross-sectional view of a lap joint structure according to a fourth embodiment of the present application;
FIG. 11 is a cross-sectional view of a lap joint structure according to a fifth embodiment of the present application;
FIG. 12 is a cross-sectional view of a lap joint structure according to a sixth embodiment of the present application;
FIG. 13 is a schematic diagram of a partial structure of a battery according to some embodiments of the present application;
FIG. 14 is a schematic diagram of a partial structure of a battery according to some other embodiments of the present application;
FIG. 15 is a schematic diagram of a partial structure of a battery according to yet some embodiments of the present application;
FIG. 16 is a partial cross-sectional view of a battery according to some embodiments of the present application;
FIG. 17 is an exploded view of a partial composition of a battery according to some embodiments of the present application; and
FIG. 18 is an assembly diagram of a partial composition of a battery according to some embodiments of the present application.

Reference signs:
Vehicle 1; Battery 1000; Controller 2000 Motor 3000;
Battery assembly 200; Battery cell 210; Box assembly 300; Box body 310; Bottom wall 311; Surrounding wall 312; Box cover 320; Expansion beam 330; Bottom protection plate 340;
Heat exchange member 100; First temperature-regulating member 110; Second temperature-regulating member 120; Third temperature-regulating member 130;
Heat exchange tube 10; Heat exchange section 101; First heat exchange tube 102; Second heat exchange tube 103; Straight section 11; Bent section 12; Arc-shaped section 121; Inclined section 122; Lap joint structure 13; First insertion portion 131; Second insertion portion 132;
Connecting joint 20;
Connector 40;
U-shaped region 50; First heat exchange flow channel 51; First heat exchange portion 511; Second heat exchange flow channel 52; Second heat exchange portion 521; Third heat exchange portion 522; Fourth heat exchange portion 523; Third heat exchange flow channel 53;
First direction X; Second direction Y; and Third direction Z.

### DETAILED DESCRIPTION OF PREFERRED EMBODIMENTS

To make the objectives, technical solutions, and advantages of embodiments of the present application clearer, the following clearly describes the technical solutions in the embodiments of the present application with reference to the drawings in the embodiments of the present application. Clearly, the described embodiments are some but not all of the embodiments of the present application. All other embodiments obtained by those skilled in the art based on the embodiments of the present application without making creative efforts shall fall within the protection scope of the present application.

Unless otherwise defined, all technical and scientific terms used in the present application have the same meaning as commonly understood by those skilled in the art to which the present application belongs. The terms used in the description of the present application herein are merely for the purpose of describing specific embodiments and are not intended to limit the present application. The terms "include", "be provided with", and any other variants thereof in the specification, claims, and accompanying drawings of the present application are intended to cover a non-exclusive inclusion. The terms "first", "second", and the like in the description and claims of the present application or in the drawings are used to distinguish between different objects, and are not used to describe a specific sequence or a primary-secondary relationship.

An "embodiment" in the present application means that a specific feature, structure, or characteristic described with reference to the embodiment may be included in at least one embodiment of the present application. The phrase in various places in the description does not necessarily all refer to the same embodiment, or a separate or alternative embodiment mutually exclusive of other embodiments.

In the description of the present application, it should be further noted that, unless explicitly specified and defined otherwise, the terms "mounted", "connected", "connect", and "attached" are to be understood in a broad sense. For example, it may be fixed connection, detachable connection, or integral connection; it may be direct connection, may be indirect connection through an intermediate medium, or may be internal communication between two elements. Those skilled in the art can understand specific meanings of these terms in the present application according to specific situations.

In the present application, the term "and/or" is only an associative relationship for describing associated objects, indicating that three relationships may be present. For example, A and/or B may indicate the following three cases: presence of only A, presence of both A and B, and presence of only B. In addition, the symbol "/" in the present application generally represents an "or" relationship between associated objects.

In the embodiments of the present application, the same reference numerals denote the same component, and a detailed description of the same component is omitted in different embodiments for the sake of brevity. It should be understood that the dimensions of various components, such as the thickness, length, and width, and the dimensions of an integrated device, such as the overall thickness, length, and width, in the embodiments of the present application shown in the figures are merely illustrative and should not be construed as limiting the present application.

The term "a plurality of" in the present application refers to more than two (including two).

At present, in view of the development of the market, the use of power batteries is becoming increasingly more widespread. Power batteries are used not only in energy storage power systems such as hydropower, thermal power, wind power, and solar power plants, but also in electric tools such as electric bicycles, electric motorcycles, and electric vehicles, as well as military equipment, aerospace, and many other fields. As an application field of power batteries continues to expand, a market demand for power batteries continues to increase.

It may be understood that a temperature environment in a battery is affected by external weather conditions. Battery cells in the battery need to be within a certain temperature range during operation. When the temperature in the battery exceeds or is lower than this range, both stability and performance of the battery will be significantly affected. For example, in hot weather, the battery cells in the battery need cooling to dissipate heat, so that the temperature in the battery is within a required temperature range; and in cold weather, the battery cells in the battery need heating to raise the temperature, so that the temperature in the battery can still be within the required temperature range.

A heat exchange tube can be configured to circulate a heat exchange medium and exchange heat with a component to be heat-exchanged such as a battery, so that heat energy or cold energy of the heat exchange medium is transferred to the component to be heat-exchanged, thereby implementing heat exchange with the component to be heat-exchanged to heat or cool the component to be heat-exchanged, achieving temperature regulation, enabling the component to be heat-exchanged to be within a more suitable temperature range.

A bent path of the heat exchange tube affects the heat exchange area and temperature distribution between the heat exchange tube and the component to be heat-exchanged. In some related technologies, in order to increase the heat exchange area and adapt to temperature field distribution requirements of thermal management, an extension path of the heat exchange tube is complex, for example, a bent region is included, and a bent radius is as small as possible, so as to increase the coverage area of the heat exchange tube within a certain space range and adjust temperature distribution. However, this makes it difficult to form a heat exchange tube, and interference is likely to occur in different regions in a bending and forming procedure.

Based on this, the present application provides a heat exchange tube, including: a plurality of heat exchange sections, the plurality of heat exchange sections being separately formed, and the plurality of heat exchange sections being sequentially spliced and communicated. Each heat exchange section includes a bent section and a straight section, two straight sections of any two adjacent heat exchange sections are connected by means of a lap joint structure, the lap joint structure includes a first insertion portion and a second insertion portion, and the first insertion portion is inserted into the second insertion portion and is connected to the second insertion portion.

In the heat exchange tube with the foregoing structure, the plurality of heat exchange sections are separately formed and sequentially spliced and communicated, so that the bent section and the straight section of each heat exchange section are not interfered with by other heat exchange sections in a forming procedure, which reduces forming difficulty and helps to improve production efficiency. In addition, there is no need to increase the spacing between the plurality of heat exchange sections of the heat exchange tube to avoid interference in the forming procedure. Therefore, within a certain space range, the heat exchange tube can be arranged more densely, which helps to increase the heat exchange area, and an extension path of the heat exchange tube from an inlet to an outlet can also be more flexible and varied, which helps to satisfy temperature regulation requirements of different temperature field distributions.

The heat exchange tube disclosed in the embodiments of the present application can be used in an electric apparatus using a battery as a power supply or various energy storage systems using a battery as an energy storage element. The electric apparatus can be, but is not limited to, a mobile phone, a tablet computer, a notebook computer, an electric toy, an electric tool, a battery-powered vehicle, an electric vehicle, a ship, a spacecraft, and the like. The electric toy may include a stationary or mobile electric toy, such as a game machine, an electric car toy, an electric ship toy, an electric airplane toy, and the like, and the spacecraft may be an airplane, a rocket, a space shuttle, a spaceship, etc.

To facilitate description, in the following embodiments, as an example for description, an electric apparatus in an embodiment of the present application is a vehicle 1.

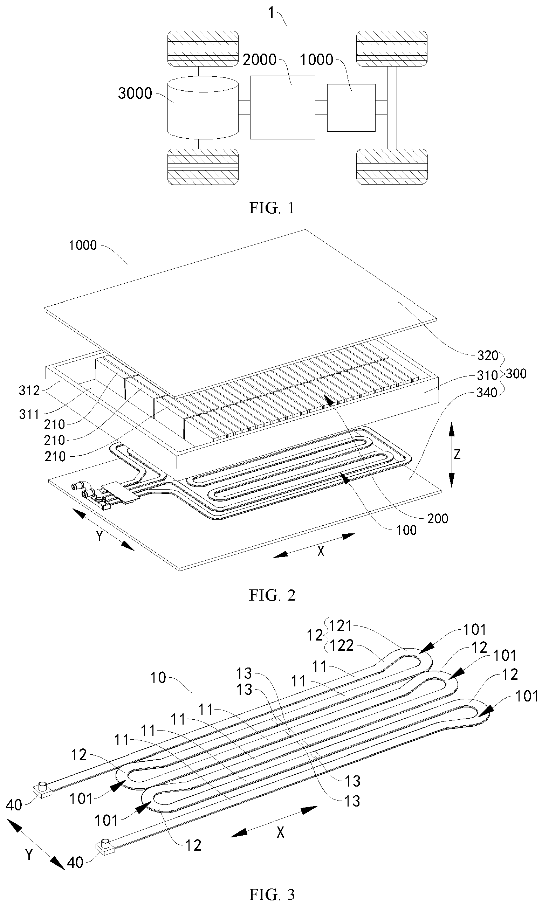

Referring to FIG. 1, FIG. 1 is a schematic diagram of a vehicle 1 according to some embodiments of the present application. The vehicle 1 may be a fuel vehicle, a gas vehicle, or a new energy vehicle, and the new energy vehicle may be a battery electric vehicle, a hybrid vehicle, or a range-extended electric vehicle. Inside the vehicle 1, a battery 1000 is provided. The battery 1000 may be disposed at the bottom, head, or tail of the vehicle 1. The battery 1000 may be used to power the vehicle 1, for example, the battery 1000 may be used as an operating power source of the vehicle 1. The vehicle 1 may further include a controller 2000 and a motor 3000, where the controller 2000 is used to control the battery 1000 to power the motor 3000, for example, for a working power requirement of the vehicle 1 during starting, navigating, and driving.

In some embodiments of the present application, the battery 1000 may be used not only as the operating power source of the vehicle 1, but also as a driving power source of the vehicle 1, instead of or partially instead of fuel or natural gas to provide driving power for the vehicle 1.

Referring to FIG. 2, FIG. 2 is an exploded view of a battery 1000 according to some embodiments of the present application. The battery 1000 includes a box assembly 300, battery cells 210, and a heat exchange member 100. The box assembly 300 has an accommodating cavity, the battery cells 210 are accommodated in the accommodating cavity of the box assembly 300, and the heat exchange member 100 may be disposed between the battery cells 210 and the box assembly 300, or may be disposed between adjacent battery cells 210.

The box assembly 300 is used to provide an accommodating space for the battery cells 210, and the box assembly 300 may have various structures. In some embodiments, the box assembly 300 may include a first part (for example, a box body 310 as described below) and a second part (for example, a box cover 320 as described below), where the first part and the second part fit to each other to define an accommodating space for accommodating the battery cells 210. The second part may be a hollow structure with an opening at one end, the first part may be a plate-like structure, and the first part covers an opening side of the second part, so that the first part and the second part jointly define the accommodating space. The first part and the second part may each be a hollow structure with an opening on one side, and an opening side of the first part covers an opening side of the second part. Certainly, the box assembly 300 formed by the first part and the second part may be in various shapes such as cylinder, cuboid, and the like. Optionally, in some embodiments, the box assembly 300 further includes a bottom protection plate 340, which is disposed on the lower side of the box body 310 to further enhance bearing strength and impact resistance of the bottom of the box body 310. The bottom protection plate 340 may be made of various materials, including but not limited to: copper, iron, aluminum, stainless steel, an aluminum alloy, and the like.

In the battery 1000, there may be a plurality of battery cells 210, and the plurality of battery cells 210 may be subjected to series connection, parallel connection, or series-parallel connection. The series-parallel connection means that the plurality of battery cells 210 are subjected to both series connection and parallel connection. The plurality of battery cells 210 may be directly connected in series, in parallel, or in a combination of both, and then the whole composed of the plurality of battery cells 210 is accommodated in the box assembly 300. Certainly, the battery 1000 may alternatively be a battery module formed by integrating the plurality of battery cells 210 by series connection, parallel connection, or series-parallel connection, and then a plurality of battery modules are integrated by series connection, parallel connection, or series-parallel connection, and accommodated in the box assembly 300. The battery 1000 may further include other structures. For example, the battery 1000 may further include a busbar component for implementing an electrical connection between the plurality of battery cells 210.

Each battery cell 210 may be a secondary battery or a primary battery, or may be a lithium-sulfur battery, a sodium-ion battery, or a magnesium-ion battery, but is not limited thereto. The battery cell 210 may be in the shape of a cylinder, a flat body, a cuboid, or the like.

In the battery 1000, the heat exchange member 100 may be disposed between the plurality of battery cells 210 and the top wall of the box assembly 300, or may be disposed between the plurality of battery cells 210 and the bottom wall of the box assembly 300, or may be disposed between the bottom wall of the box assembly 300 and the bottom protection plate 340, or may be disposed between two adjacent battery cells 210, so as to provide heat exchange for the plurality of battery cells 210. In some embodiments, the heat exchange member 100 may include a heat exchange tube 10 and a manifold, where the heat exchange tube 10 is connected to the manifold, the heat exchange tube 10 may be a flat tube, a round tube, a harmonica tube, or a tube with other shapes, and the manifold may be a rectangular tube, a round tube, or the like.

Hereinafter, the heat exchange tube 10 according to the embodiments of the present application is described with reference to the drawings.

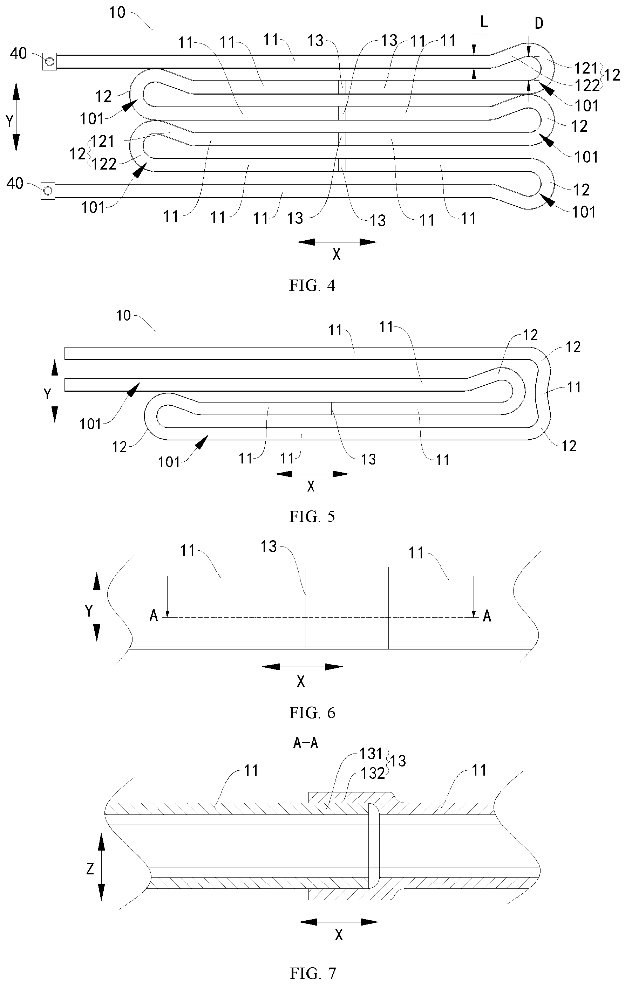

Referring to FIG. 3 to FIG. 5, FIG. 3 and FIG. 4 are schematic diagrams of a structure of a heat exchange tube 10 according to some embodiments of the present application; and FIG. 5 is a schematic diagram of a structure of a heat exchange tube 10 according to some other embodiments of the present application. The heat exchange tube 10 includes: a plurality of heat exchange sections 101.

Specifically, the plurality of heat exchange sections 101 are separately formed, and the plurality of heat exchange sections 101 are sequentially spliced and communicated. Each heat exchange section 101 includes a bent section 12 and a straight section 11, and two straight sections 11 of any two adjacent heat exchange sections 101 are connected by means of a lap joint structure 13. Referring to FIG. 6 to FIG. 12, FIG. 6 is a partial schematic diagram of a lap joint structure 13 according to an embodiment of the present application; and FIG. 7 to FIG. 12 are cross-sectional views of the lap joint structure 13 in the direction indicated by line A-A in FIG. 6 according to different embodiments of the present application. The lap joint structure 13 includes a first insertion portion 131 and a second insertion portion 132, and the first insertion portion 131 is inserted into the second insertion portion 132 and is connected to the second insertion portion 132.

The heat exchange tube 10 is a tube structure capable of allowing a medium to flow and defining a flow path of the medium, such as a circular tube, a rectangular tube, an elliptical tube, or the like. The heat exchange tube 10 may be made of a material with excellent heat conduction performance, such as a metal material, specifically aluminum or copper. For example, the heat exchange tube 10 may be an aluminum tube.

That the plurality of heat exchange sections 101 are separately formed, and the plurality of heat exchange sections 101 are sequentially spliced and communicated means that in a production procedure, the plurality of heat exchange sections 101 are separately processed and formed and then connected together. The forming manner of each heat exchange section 101 is extrusion forming, or may be sheet metal bending forming and fixed by welding, or the like. The plurality of heat exchange sections 101 may be formed in the same or different manners. Structures of the plurality of heat exchange sections 101 may be the same or different, for example, structures of at least two heat exchange sections 101 are the same, and the at least two heat exchange sections 101 may be formed into a standard member or a universal member, and an extension length and an extension path required by the heat exchange tube 10 can be adjusted by adjusting the quantity of heat exchange sections 101, which helps to reduce forming difficulty of the heat exchange section 101. For example, the structures of the plurality of heat exchange sections 101 are different, so that the structure of each heat exchange section 101 can be flexibly adjusted based on a position on the extension path of the heat exchange tube 10 to satisfy requirements of a more complex extension path of the heat exchange tube 10.

Connected heat exchange sections 101 may be directly connected by means of the lap joint structure 13, or may be indirectly connected by means of the lap joint structure 13. The first insertion portion 131 of the lap joint structure 13 is inserted into the second insertion portion 132, and the second insertion portion 132 can define an insertion space to accommodate the first insertion portion 131. The insertion connection manner is more convenient for assembly. Positioning between the plurality of heat exchange sections 101 is precise, and there is no need to provide other communication and mating members, which helps to reduce costs.

Certainly, in some embodiments, in addition to insertion connection, the first insertion portion 131 and the second insertion portion 132 may alternatively be connected by other manners such as welding, interference fit, or bonding, so as to further improve connection reliability and connection sealing at the lap joint structure 13.

The straight section 11 refers to a tube section extending along a straight line, and the bent section 12 refers to a tube section extending along a polyline or a curve. By providing the bent section 12, the direction of the extension path of the heat exchange tube 10 from the inlet to the outlet can be reversed, so that the heat exchange tube 10 can cover a larger area within a certain space range in the case of having a relatively small width, thereby increasing the heat exchange area with a tube to be heat-exchanged 10, increasing heat exchange efficiency, and improving temperature uniformity of the component to be heat-exchanged.

The quantity of bent sections 12 and the quantity of straight sections 11 that are included in each heat exchange section 101 may be flexibly set based on forming difficulty in different regions, and the quantities of bent sections 12 included in the plurality of heat exchange sections 101 may be the same or different, and the quantities of straight sections 11 included in the plurality of heat exchange sections 101 may be the same or different. For example, each heat exchange section 101 may include one bent section 12 and one straight section 11. For another example, as shown in FIG. 3 and FIG. 4, each heat exchange section 101 may include one bent section 12 and two straight sections 11. For yet another example, as shown in FIG. 5, some heat exchange sections 101 include one bent section 12 and two straight sections 11, and other heat exchange sections 101 include three bent sections 12 and four straight sections 11.

The heat exchange tube 10 is obtained by splicing the plurality of heat exchange sections 101 after being separately formed, so that operations such as bending in the forming procedure of each heat exchange section 101 are not interfered with by positions of other heat exchange sections 101 of the heat exchange tube 10, thereby reducing forming difficulty of the heat exchange sections 101. Moreover, within a certain spatial range, the smaller the spacing between adjacent heat exchange sections 101 is, the easier it is to cause interference in the forming procedure, while forming of the spliced heat exchange sections 101 in the present application is not affected by an arrangement spacing. Therefore, the arrangement spacing of the heat exchange sections 101 can be reduced, thereby arranging more heat exchange sections 101 within a certain spatial range, increasing the heat exchange area, and improving heat exchange effect.

Taking the heat exchange tube 10 shown in FIG. 3 and FIG. 4 as an example, the heat exchange section 101 includes two straight sections 11 and a bent section 12 connected between the two straight sections 11. The straight sections 11 extend in a first direction X, and several heat exchange sections 101 are arranged in a second direction Y. If the heat exchange tube 10 is an integrated piece, the bent section 12 of the heat exchange section 101 is easily interfered with by adjacent heat exchange sections 101 in the second direction Y in a bending procedure, and the smaller the spacing between adjacent heat exchange sections 101 in the second direction Y is, the easier the interference is generated. However, in the present application, the forming procedure of the heat exchange section 101 formed separately is not interfered with by other heat exchange sections 101. Therefore, the spacing between adjacent heat exchange sections 101 in the second direction Y can be as small as possible, for example, adjacent heat exchange sections 101 are in direct contact, and interference is less likely to occur. As a result, more heat exchange sections 101 can be arranged in the second direction Y, thereby increasing the overall heat exchange area.

Taking the heat exchange section 101 shown in FIG. 5 as an example, the heat exchange tube 10 includes two heat exchange sections 101, which are a first heat exchange section 101 and a second heat exchange section 101, respectively. The first heat exchange section 101 includes two straight sections 11 and a bent section 12 connected between the two straight sections 11. The straight sections 11 extend in the first direction X; and the second heat exchange section 101 includes three straight sections 11 extending in the first direction X, one semicircular arc-shaped bent section 12, one straight section 11 extending in the second direction Y, and two quarter arc-shaped bent sections 12. The first heat exchange section 101 is located in a U-shaped region 50 enclosed by the second heat exchange section 101, making the forming of the bent section 12 of the first heat exchange section 101 easily interfered with by the second heat exchange section 101, and the forming of the three bent sections 12 of the second heat exchange section 101 easily interfered with by the first heat exchange section 101. By providing the first heat exchange section 101 and the second heat exchange section 101 as a splicing structure, the two heat exchange sections 101 can be separately formed without interfering with each other.

It should be noted that, in the plurality of straight sections 11 of the second heat exchange section 101, the straight section 11 extending in the second direction Y makes the spacing between the two straight sections 11 connected to the quarter arc-shaped bent sections 12 relatively large. Therefore, the forming of the three bent sections 12 of the second heat exchange section 101 is not interfered with by other portions, and the four straight sections 11 and the three bent sections 12 of the second heat exchange section 101 can be integrally formed to reduce the quantity of splices of the heat exchange tube 10 and reduce a risk of leakage.

In the heat exchange tube 10 according to the embodiments of the present application, the plurality of heat exchange sections 101 are separately formed and sequentially spliced and communicated, so that the bent section 12 and the straight section 11 of each heat exchange section 101 are not interfered with by other heat exchange sections 101 in the forming procedure, which reduces forming difficulty and helps to improve production efficiency; and in addition, there is no need to increase the spacing between the plurality of heat exchange sections 101 of the heat exchange tube 10 to avoid interference in the forming procedure. Therefore, within a certain space range, the heat exchange tube 10 can be arranged more densely, which helps to increase the heat exchange area, and an extension path of the heat exchange tube 10 from the inlet to the outlet can also be more flexible and varied, which helps to satisfy temperature regulation requirements of different temperature field distributions. Moreover, splicing of the plurality of heat exchange sections 11 is implemented by means of the lap joint structure 13, and the insertion connection manner is more convenient for assembly. Positioning between the plurality of heat exchange sections 101 is precise, and there is no need to provide other communication and mating members, which helps to reduce costs.

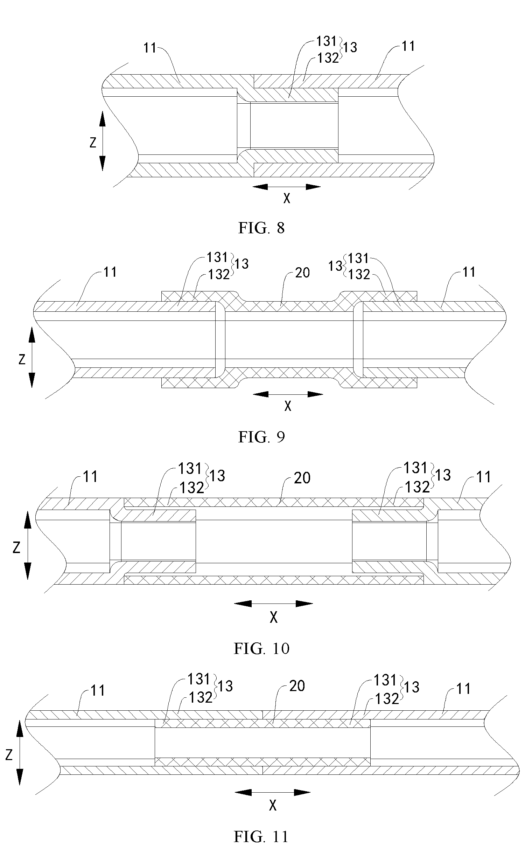

According to some embodiments of the present application, as shown in FIG. 7 and FIG. 8, in the two straight sections 11 connected by means of the lap joint structure 13, an end portion of one straight section 11 is formed into the first insertion portion 131, and an end portion of the other straight section 11 is formed into the second insertion portion 132. In other words, two heat exchange sections 101 are directly inserted and connected by means of straight sections 11, which can not only decrease an insertion gap and reduce the risk of leakage, but also reduce an insertion working procedure and improve splicing efficiency.

In some embodiments, as shown in FIG. 7, the inner peripheral surface of the first insertion portion 131 is coplanar with the inner peripheral surface of a connected heat exchange section 101, the second insertion portion 132 is formed into a flared section, and the size of the inner peripheral surface of the second insertion portion 132 is greater than the size of the inner peripheral surface of the connected heat exchange section 101.

The inner peripheral surface of the first insertion portion 131 is coplanar with the inner peripheral surface of the connected heat exchange section 101, that is, in the direction perpendicular to the insertion direction, the size of the inner peripheral surface of the first insertion portion 131 is equal to the size of the inner peripheral surface of the heat exchange section 101. For example, the inner peripheral surface of the first insertion portion 131 and the inner peripheral surface of the connected heat exchange section 101 are cylindrical surfaces with equal diameters.

The flared section refers to a section in which the size of the inner peripheral surface of the second insertion portion 132 is greater than the size of the inner peripheral surface of the connected heat exchange section 101 in the direction perpendicular to the insertion direction. For example, the inner peripheral surface of the second insertion portion 132 and the inner peripheral surface of the connected heat exchange section 101 are cylindrical surfaces with different diameters, and the diameter of the second insertion portion 132 is larger. Optionally, the flared section may be formed by performing a flaring process on an end portion of the straight section 11, and there is no need for integral processing to obtain the flared section in the forming procedure of the heat exchange section 101, and whether to obtain the flared section by using the flaring process is flexibly selected based on an arrangement position of the heat exchange section 101, thereby facilitating forming of the heat exchange section 101 into a standard member and reducing production costs.

The first insertion portion 131 is inserted into the flared section, so that the heat exchange section 101 connected to the flared section can limit the insertion depth of the first insertion portion 131, thereby preventing the insertion depth of the first insertion portion 131 from being too large and affecting an extension length of the heat exchange tube 10. In addition, the inner peripheral surface of the first insertion portion 131 is coplanar with the inner peripheral surface of the connected heat exchange section 101, so that the first insertion portion 131 is less likely to cause an increase in flow resistance in the connected heat exchange section 101. If the size of the inner peripheral surface of the flared section is relatively large, influence on flow resistance in the connected heat exchange section 101 after the first insertion portion 131 is inserted can be reduced, thereby reducing the overall flow resistance of the heat exchange tube 10.

In some other embodiments, as shown in FIG. 8, the first insertion portion 131 is formed into a constricted section, and the size of the outer peripheral surface of the first insertion portion 131 is less than the size of the outer peripheral surface of the connected heat exchange section 101, and the outer peripheral surface of the second insertion portion 132 is coplanar with the outer peripheral surface of the connected heat exchange section 101.

The constricted section refers to a section in which the size of the outer peripheral surface of the first insertion portion 131 is less than the size of the outer peripheral surface of the connected heat exchange section 101 in the direction perpendicular to the insertion direction. Optionally, the constricted section can be obtained by performing a contraction processing on an end portion of the straight section 11, and there is no need for integral processing to obtain the constricted section in the forming procedure of the heat exchange section 101, and whether to perform a contraction processing is flexibly selected based on an arrangement position of the heat exchange section 101, thereby facilitating forming of the heat exchange section 101 into a standard member and reducing production costs.

The constricted section is inserted into the second insertion portion 132, so that the heat exchange section 101 connected to the constricted section can mate with the second insertion portion 132 to implement insertion limit, thereby preventing the insertion depth of the first insertion portion 131 from being too large and affecting an extension length of the heat exchange tube 10. In addition, the outer peripheral surface of the second insertion portion 132 is coplanar with the outer peripheral surface of the connected heat exchange section 101, which helps to improve flatness of the outer surface of the heat exchange tube 10. For example, as shown in FIG. 8, the upper surface of the heat exchange tube 10 is formed into a plane. In this way, the entire upper surface of the heat exchange tube 10 can be in contact with the component to be heat-exchanged for heat exchange, thereby reducing thermal resistance and improving heat exchange efficiency.

According to some embodiments of the present application, as shown in FIG. 9 to FIG. 12, the heat exchange tube 10 further includes a connecting joint 20. Two ends of the connecting joint 20 are respectively connected to end portions of two straight sections 11 of two adjacent heat exchange sections 101 by means of lap joint structures 13. One of an end portion of the connecting joint 20 and an end portion of the straight section 11 is formed into the first insertion portion 131, and the other is formed into the second insertion portion 132.

Two ends of the connecting joint 20 are respectively connected to end portions of two straight sections 11 of two adjacent heat exchange sections 101 by means of lap joint structures 13. In other words, two lap joint structures 13 are formed between two connected heat exchange sections 101.

One of an end portion of the connecting joint 20 and an end portion of the straight section 11 is formed into the first insertion portion 131, and the other is formed into the second insertion portion 132. Specifically, the first insertion portion 131 connected to the straight section 11 may be inserted into the second insertion portion 132 connected to the connecting joint 20, or the first insertion portion 131 connected to the connecting joint 20 may be inserted into the second insertion portion 132 connected to the straight section 11. Moreover, two ends of the connecting joint 20 may both be formed into first insertion portions 131 or second insertion portions 132, or one end of the connecting joint 20 is the first insertion portion 131 and the other end of the connecting joint 20 is the second insertion portion 132, which are all within the protection scope of the present application.

In the embodiments in which two ends of the connecting joint 20 are both the first insertion portions 131 or the second insertion portions 132, end portions of two connected heat exchange sections 101 are both the second insertion portions 132 or the first insertion portions 131, which helps to improve structural consistency of the two heat exchange sections 101, and makes it easier for the heat exchange section 101 to be formed into a standard member, thereby reducing production costs and improving production efficiency.

Compared with the heat exchange section 101, the connecting joint 20 has a shorter extension length, is easier to form, and has a more flexible structural arrangement. Therefore, indirect connection between two heat exchange sections 101 is implemented by means of the connecting joint 20. A sealing structure may be provided on the connecting joint 20, for example, a solder layer is provided, which can be directly heated up and welded after inserting the connecting joint 20 into the heat exchange section 101 to achieve sealing. However, the heat exchange section 101 does not need to be provided with a sealing structure such as a solder layer, and the structure of the heat exchange section 101 is simple. For example, the heat exchange section 101 can be extruded from a single material to form, without being limited by the fact that the heat exchange section 101 cannot be extruded from a composite material to form, which helps to reduce forming difficulty of the heat exchange section 101 and improve production efficiency. In addition, extrusion forming makes sealing performance of the heat exchange section 101 more reliable.

In some embodiments of the present application, as shown in FIG. 9 and FIG. 10, in the lap joint structure 13 connecting the straight section 11 and the connecting joint 20, the first insertion portion 131 is formed into a constricted section; or the second insertion portion 132 is formed into a flared section; or the first insertion portion 131 is formed into a constricted section and the second insertion portion 132 is formed into a flared section.

The constricted section refers to a section in which the size of the outer peripheral surface of the constricted section is less than the size of the outer peripheral surface of a connected component in the direction perpendicular to the insertion direction; and the flared section refers to a section in which the size of the inner peripheral surface of the flared section is greater than the size of the inner peripheral surface of a connected component in the direction perpendicular to the insertion direction.

By providing at least one of the constricted section and the flared section, insertion limit of the lap joint structure 13 can be implemented, so that the insertion depth is less likely to be too large and to affect the extension length of the heat exchange tube 10. In addition, the first insertion portion 131 is formed into a constricted section, which facilitates a relatively smooth transition between the outer peripheral surface of the straight section 11 and the outer peripheral surface of the connecting joint 20 after the second insertion portion 132 is inserted. This helps to improve flatness of the outer surface of the heat exchange tube 10, so that the outer surface of the heat exchange tube 10 can be in full contact with the component to be heat-exchanged for heat exchange, thereby reducing thermal resistance and improving heat exchange efficiency. The second insertion portion 132 is formed into a flared section, and after the first insertion portion 131 is inserted into the flared section, it helps to make transition between the inner peripheral surface of the straight section 11 and the inner peripheral surface of the connecting joint 20 relatively smooth, thereby reducing influence of the lap joint structure 13 on flow resistance, thereby reducing the overall flow resistance of the heat exchange tube 10.

For example, in some specific embodiments, as shown in FIG. 9, the second insertion portion 132 connected to the connecting joint 20 is formed into a flared section, and the size of the inner peripheral surface of the second insertion portion 132 is greater than the size of the inner peripheral surface of the connecting joint 20, and the inner peripheral surface of the first insertion portion 131 is coplanar with the inner peripheral surface of the straight section 11. In some specific embodiments, as shown in FIG. 10, the first insertion portion 131 connected to the straight section 11 is formed into a constricted section, and the size of the outer peripheral surface of the first insertion portion 131 is less than the size of the outer peripheral surface of the straight section 11, and the outer peripheral surface of the second insertion portion 132 is coplanar with the outer peripheral surface of the connecting joint 20.

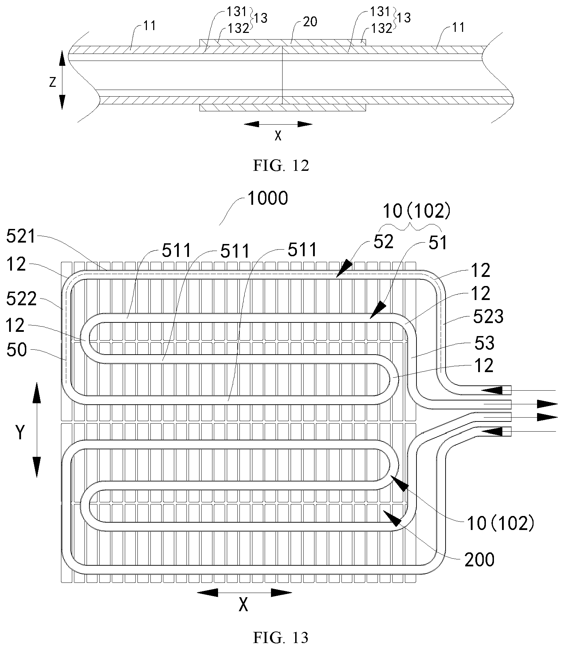

In some other embodiments of the present application, as shown in FIG. 11 and FIG. 12, the outer peripheral surface of one of the straight section 11 and the connecting joint 20 is coplanar with the outer peripheral surface of a connected first insertion portion 131, and the inner peripheral surface of the other is coplanar with the inner peripheral surface of a connected second insertion portion 132.

In other words, end portions of the straight section 11 and the connecting joint 20 do not need to be flared and constricted, and the connecting joint 20 is directly sleeved on the straight section 11 or inserted into the straight section 11 to achieve insertion, which helps to reduce an assembly working procedure and improve production efficiency.

For example, as shown in FIG. 11, two ends of the connecting joint 20 are inserted into straight sections 11 of two heat exchange sections 101, so that end portions of the straight sections 11 of the two heat exchange sections 101 are opposite and in contact, which improves flatness of the outer peripheral surface of the heat exchange tube 10, and helps to improve contact heat exchange effect with the component to be heat-exchanged. For example, as shown in FIG. 12, two ends of the connecting joint 20 are sleeved on straight sections 11 of two heat exchange sections 101, so that end portions of the straight sections 11 of the two heat exchange sections 101 are opposite and in contact, which improves flatness of the inner peripheral surface of the heat exchange tube 10, and helps to reduce flow resistance.

In some embodiments, the outer peripheral surface of the first insertion portion 131 is connected to the inner peripheral surface of the second insertion portion 132. The connection manner includes, but is not limited to, bonding, welding, or the like. The connection area between the first insertion portion 131 and the second insertion portion 132 is relatively large, which helps to improve connection reliability and sealing reliability.

In some embodiments, the first insertion portion 131 and the second insertion portion 132 are connected by means of welding. The connection manner is simple and firm, and has good sealing performance. For example, in some embodiments in which two heat exchange sections 101 are directly connected, insertion can be performed after applying solder to at least one of the outer peripheral surface of the first insertion portion 131 and the inner peripheral surface of the second insertion portion 132, and then welding is performed by heating. In some embodiments in which two heat exchange sections 101 are connected by means of the connecting joint 20, the connecting joint 20 may have a solder layer, and the heat exchange sections 101 can be directly heated and welded after being inserted into the connecting joint 20.

In some embodiments of the present application, as shown in FIG. 3 to FIG. 5, each of the heat exchange sections 101 is integrally formed from a single tube, eliminating an assembly working procedure between the straight section 11 and the bent section 12, improving production efficiency, and eliminating the need for splicing and sealing, which helps to reduce a risk of sealing failure.

In some embodiments, as shown in FIG. 3, the heat exchange tube 10 is a flat tube. In other words, the heat exchange tube 10 has different sizes in at least two directions perpendicular to the extension path of the heat exchange tube 10. For example, as shown in FIG. 3, the thickness of the heat exchange tube 10 in a vertical direction (a third direction Z shown in FIG. 7) is less than the width of the heat exchange tube 10 in a horizontal direction, and the heat exchange tube 10 is formed into a flat tube.

According to some embodiments of the present application, as shown in FIG. 3 and FIG. 4, the heat exchange section 101 includes one bent section 12 and two straight sections 11, and the two straight sections 11 are respectively connected to two ends of the bent section 12.

By changing a bending angle of the bent section 12, the included angle between two connected straight sections 11 can be changed, thereby making the extension path of the heat exchange section 101 more flexible and varied. For example, the bending angle of the bent section 12 is 90°, and the two straight sections 11 correspondingly connected can be perpendicular to each other, and the bending angle of the bent section 12 is 180°, and the two straight sections 11 correspondingly connected can be parallel to each other. The heat exchange section 101 is generally formed into a U-shaped, V-shaped or L-shaped structure, the quantity of bent sections 12 included in the heat exchange section 101 is smaller, the forming difficulty of the heat exchange section 101 is lower. In addition, the heat exchange section 101 can be spliced with other heat exchange sections 101 by means of the straight sections 11 at two ends, splicing is easier, and a problem of sealing failure at a splice is less likely to occur.

In some embodiments, with continued reference to FIG. 3 and FIG. 4, the two straight sections 11 of the heat exchange section 101 extend in the first direction X and are arranged in the second direction Y, and the first direction X and the second direction Y are disposed at an included angle. In two connected heat exchange sections 101, one straight section 11 of one heat exchange section 101 is opposite to and connected to one straight section 11 of the other heat exchange section 101 in the first direction X.

The heat exchange section 101 is generally formed into a U-shaped structure, openings of U-shaped structures of two connected heat exchange sections 101 can be arranged opposite to each other in the first direction X and staggered in the second direction Y, straight sections 11 of the two connected heat exchange sections 101 are connected by means of the lap joint structure 13, and the two unconnected straight sections 11 are respectively located on two sides of the lap joint structure 13 in the second direction Y, so that the two straight sections 11 of the U-shaped heat exchange section 101 can be respectively connected to two heat exchange sections 101 to implement series connection of a plurality of heat exchange sections 101. The heat exchange tube 10 is formed into a serpentine tube extending back and forth in the first direction X, which has a better effect of increasing the heat exchange area, and makes it easier to splice the plurality of heat exchange sections 101.

In some embodiments of the present application, as shown in FIG. 4, lengths of two straight sections 11 located at two ends of a splicing path are greater than the length of an intermediate straight section 11. The two straight sections 11 are parallel to each other and respectively have an inlet and an outlet of the heat exchange tube 10, and the inlet and the outlet are located at the same end of the two straight sections 11 in the length direction.

The intermediate straight section 11 refers to other straight sections 11 located between two straight sections 11 at two ends on the splicing path, that is, on the extension path of the heat exchange tube 10. For example, as shown in FIG. 4, the heat exchange section 101 is a U-shaped structure and is spliced to form a serpentine heat exchange tube 10, and two straight sections 11 located on two sides in the second direction Y are the two straight sections 11 at two ends on the splicing path.

The inlet and the outlet of the heat exchange tube 10 are used for a heat exchange medium to flow into and out of the heat exchange tube 10. The inlet and the outlet are located at the same end of the two straight sections 11 in the length direction. For example, the inlet and the outlet shown in FIG. 4 are disposed at the same end of the corresponding straight section 11 in the first direction X.

The lengths of the straight sections 11 at two ends are greater than the length of the intermediate straight section 11, so that the straight sections 11 at two ends can be close to the edge of the heat exchange tube 10 in the length direction, which facilitates connection to an external flow path. For example, as shown in FIG. 4, the straight sections 11 at two ends extend in the first direction X beyond the edge of the intermediate heat exchange section 101. In addition, the inlet and the outlet of the heat exchange tube 10 are located at the same end, so that the inlet and the outlet are arranged at close positions with a small spacing, which further facilitates the connection of the heat exchange tube 10 to the external flow path.

According to some embodiments of the present application, as shown in FIG. 4, the heat exchange tube 10 includes a plurality of straight sections 11 and at least one bent section 12 that are sequentially communicated, the straight sections 11 extend in the first direction X and the plurality of straight sections 11 are arranged at intervals in the second direction Y, the first direction X and the second direction Y are disposed at an included angle, and the at least one bent section 12 is sequentially connected to and communicated with the plurality of straight sections 11.

The plurality of straight sections 11 are arranged at intervals in the second direction Y and are sequentially connected and communicated by means of bent sections 12, which means that channels in the straight sections 11 are not directly communicated, but are indirectly communicated by means of the bent sections 12, and the straight sections 11 may spatially have a certain gap therebetween or may be in contact with each other.

By connecting the bent section 12 to the straight section 11, the direction of the extension path of the heat exchange tube 10 from the inlet to the outlet can be reversed. The heat exchange tube 10 is formed into a serpentine structure, which helps to enable the heat exchange tube 10 to cover a larger area within a certain space range, thereby increasing the heat exchange area with the component to be heat-exchanged, increasing heat exchange efficiency, and improving temperature uniformity of the component to be heat-exchanged.

In some embodiments, as shown in FIG. 4, the bent section 12 includes an arc-shaped section 121 and an inclined section 122, the inclined section 122 is connected to the arc-shaped section 121 and one of two adjacent straight sections 11, and the inclined section 122 is away from the arc-shaped section 121 in the first direction X and is inclined toward a direction close to the other of the two adjacent straight sections 11.

The two adjacent straight sections 11 refer to two adjacent straight sections 11 in the second direction Y. The inclined section 122 extends obliquely, and as shown in FIG. 4, the arc-shaped section 121 is in a shape of a semicircular arc. The rear end of the inclined section 122 is connected to one end of the arc-shaped section 121 and the front end of the inclined section 122 is connected to one straight section 11 on the left side in two straight sections 11. The inclined section 122 is inclined from rear to front and to right, and one straight section 11 on the right side in the two straight sections 11 is connected to the other end of the arc-shaped section 121. Therefore, the inclined section 122 can reduce the spacing between two straight sections 11 in the second direction Y, so that the spacing between the two straight sections 11 is less than the bent diameter of the inner edge of the arc-shaped section 121. Therefore, the spacing between any two straight sections 11 connected by means of the bent section 12 is reduced, and the space occupied by all straight sections 11 of the heat exchange tube 10 in the second direction Y is reduced. In other words, in the case that a required heat exchange range in the second direction Y is fixed, more straight sections 11 can be arranged, thereby increasing the heat exchange area within a certain space range, and improving heat exchange effect and heat exchange uniformity of different regions of the component to be heat-exchanged.

In some embodiments, as shown in FIG. 4, the bent section 12 includes one arc-shaped section 121 and one inclined section 122, one end of the inclined section 122 is connected to one end of the arc-shaped section 121, and the other end of the inclined section 122 and the other end of the arc-shaped section 121 are respectively connected to two adjacent straight sections 11. The arc-shaped section 121 is formed by bending along an arc, the inclined section 122 can extend along a straight line, the arc-shaped section 121 and the inclined section 122 need a change in a bending manner in a forming procedure. The bent section 12 includes one inclined section 122, so that the quantity of bending manner switches in a bending forming procedure can be reduced, so as to improve production efficiency and reduce forming difficulty.

In some other embodiments, the bent section 12 includes one arc-shaped section 121 and two inclined sections 122, and the two inclined sections 122 are connected to two ends of the arc-shaped section 121 and two adjacent straight sections 11. The effect of reducing an arrangement spacing of the straight sections 11 is better, and in the case that a requirement for reducing the spacing is fixed, the angle of inclination required by each inclined section 122 is smaller, which helps to reduce forming difficulty.

In some embodiments, as shown in FIG. 4, the bent diameter of the inner edge of the bent section 12 is D. For example, the bent diameter of the inner edge of the arc-shaped section 121 is D. The spacing between two straight sections 11 of the same heat exchange section 101 in the second direction Y is 60%D to 70%D. If the bent section 12 does not include the inclined section 122 and includes only the arc-shaped section 121, the spacing between two straight sections 11 of the same heat exchange section 101 is equal to D. By providing the inclined section 122, the spacing between two straight sections 11 of the same heat exchange section 101 can be reduced to make the structure more compact. If the inclination angle of the inclined section 122 is too small, the effect of reducing the spacing is not obvious, and the improvement of the heat exchange area and the heat exchange effect is not obvious. If the inclination angle of the inclined section 122 is too large, it is likely to cause positional interference between the inclined section 122 and the straight section 11 of the same heat exchange section 101 when the inclined section 122 is processed, which increases forming difficulty. Within the foregoing spacing range, not only can the space occupied by two straight sections 11 of the heat exchange section 101 in the second direction Y can be effectively reduced to effectively increase the heat exchange area, but also the inclined section 122 can be easily processed and formed to facilitate separate formation of the heat exchange section 101. In some specific embodiments, the spacing between two straight sections 11 of the same heat exchange section 101 in the second direction Y is 60%D, 62%D, 65%D, 68%D, 70%D, or the like.

In some embodiments, as shown in FIG. 4, the bent diameter of an inner edge of the bent section 12 is D, and the width of the straight section 11 in the second direction Y is L. Two straight sections 11 of the heat exchange section 101 are a first straight section 11 and a second straight section 11, and in two adjacent heat exchange sections 101, the first straight section 11 of one heat exchange section 101 and the second straight section 11 of the other heat exchange section 101 are opposite in the first direction X and connected by means of the lap joint structure 13; and the second straight section 11 of one heat exchange section 101 and the first straight section 11 of the other heat exchange section 101 are respectively located on two sides of the lap joint structure 13 in the second direction Y, and the spacing between the first straight section 11 and the second straight section 11 located on the two sides of the lap joint structure 13 is 60% (2D + L) to 70% (2D + L).

In other words, four straight sections 11 of two heat exchange sections 101 are formed in three rows in the second direction Y, and the spacing between two rows of straight sections 11 located on two sides of the second direction Y is 60% (2D + L) to 70% (2D + L).

If the bent section 12 does not include the inclined section 122 and includes only the arc-shaped section 121, the spacing between two rows of straight sections 11 located on two sides of the second direction Y is 2D + L. By providing the inclined section 122, the spacing between three rows of straight sections 11 can be reduced to make the structure more compact, thereby reducing the overall space occupied by two connected heat exchange sections 101 in the second direction Y. Within the foregoing spacing range,, the space occupied by two straight sections 11 of the heat exchange section 101 in the second direction Y can be effectively reduced, and the overall space occupied by connected heat exchange sections 101 in the second direction Y can also be reduced, so that the effect of increasing the heat exchange area is better, and the inclination angle of the inclined section 122 is proper, which facilitates separate forming of the heat exchange section 101.

For example, in an embodiment in which the component to be heat-exchanged is the battery 1000, the battery 1000 includes a battery assembly 200, which includes a plurality of rows of sets of batteries 1000 arranged in the second direction Y, and each row of sets of batteries 1000 includes a plurality of battery cells 210 arranged in the first direction X. By adjusting the inclination angle of the inclined section 122, a plurality of rows of straight sections 11 of the heat exchange section 101 can be arranged in a one-to-one correspondence with the plurality of rows of sets of batteries 1000, that is, each row of sets of batteries 1000 can be in contact with the straight sections 11 to achieve heat exchange, thereby avoiding a situation that the sets of batteries 1000 are located between two adjacent rows of straight sections 11 and thus cannot be in contact with the heat exchange tube 10 for heat exchange.

According to some embodiments of the present application, as shown in FIG. 13, the heat exchange tube 10 includes a first heat exchange tube 102, which includes a first heat exchange flow channel 51 and a second heat exchange flow channel 52. The second heat exchange flow channel 52 is bent to form a U-shaped region 50, and the first heat exchange flow channel 51 is bent and disposed in the U-shaped region 50, and is bent and connected to the second heat exchange flow channel 52, for example, through the bent section 12.

Specifically, the battery 1000 may include a plurality of battery cells 210, and the first heat exchange tube 102 is configured to exchange heat with the plurality of battery cells 210 of the battery 1000, so that the temperature of the battery 1000 may be defined to a safe operating temperature, thereby improving operating reliability of the battery 1000.

The foregoing description that "the second heat exchange flow channel 52 is bent to form a U-shaped region 50, and the first heat exchange flow channel 51 is bent and disposed in the U-shaped region 50" is intended to illustrate that the second heat exchange flow channel 52 is disposed on the periphery of the first heat exchange flow channel 51 in the circumferential direction, and may be arranged on three side edges of the first heat exchange flow channel 51 in the circumferential direction, and the second heat exchange flow channel 52 may be arranged closer to the periphery of the battery 1000 than the first heat exchange flow channel 51.

The second heat exchange flow channel 52 is bent to form a U-shaped region 50, that is, in the direction from one end of the second heat exchange flow channel 52 toward the other end of the second heat exchange flow channel 52, the second heat exchange flow channel 52 extends along a U-shaped line to form the U-shaped region 50 in a U-shape.

The first heat exchange flow channel 51 is bent and disposed in the U-shaped region 50, that is, the first heat exchange flow channel 51 is arranged in a space enclosed by the second heat exchange flow channel 52, and the first heat exchange flow channel 51 extends along a non-straight line on the inner side of the second heat exchange flow channel 52 and has at least one bent position.

It should be noted that, in this embodiment, the first heat exchange flow channel 51 is only defined to be bent and disposed in the U-shaped region 50, and a bending form of the first heat exchange flow channel 51 is not defined, that is, a specific bending form of the first heat exchange flow channel 51 may be designed based on heat exchange requirements of the battery 1000. For example, the first heat exchange flow channel 51 may extend in the length direction of the battery cell 210 (that is, the second direction Y in FIG. 13), bend toward the width direction of the battery cell 210 (that is, the first direction X in FIG. 13) after extending to a certain length, and then continue to extend in the length direction of the battery cell 210 and bend in the width direction; or the first heat exchange flow channel 51 may extend in the width direction of the battery cell 210, bend toward the length direction of the battery cell 210 after extending to a certain length, and then continue to extend in the width direction of the battery cell 210 and bend in the length direction.

The first heat exchange flow channel 51 and the second heat exchange flow channel 52 are connected in a bent manner, that is, an end of the first heat exchange flow channel 51 is connected to an end of the second heat exchange flow channel 52, and a connection position between the first heat exchange flow channel 51 and the second heat exchange flow channel 52 is a bent non-linear structure, for example, the connection position between the first heat exchange flow channel 51 and the second heat exchange flow channel 52 may be bent into an arc section.

The first heat exchange flow channel 51 is connected to the second heat exchange flow channel 52. In this way, one of an end that is of the first heat exchange flow channel 51 and that is away from the second heat exchange flow channel 52 and an end that is of the second heat exchange flow channel 52 and that is away from the first heat exchange flow channel 51 may be used as a liquid inlet end and the other may be used as a liquid outlet end. Therefore, when the first heat exchange tube 102 performs heat exchange, a heat exchange medium may flow from the first heat exchange flow channel 51 to the second heat exchange flow channel 52, or may flow from the second heat exchange flow channel 52 to the first heat exchange flow channel 51.

It may be understood that, in a procedure of the heat exchange medium flowing in the first heat exchange tube 102, the temperature of the heat exchange medium gradually changes, resulting in a gradual decrease in the heat exchange effect. For example, when the heat exchange tube 10 cools the battery assembly 200 for heat dissipation, the heat of the battery cell 210 is gradually transferred to the heat exchange medium, so that the temperature of the heat exchange medium gradually increases in the procedure of the heat exchange medium flowing along the first heat exchange tube 102, a temperature difference between the heat exchange medium and the battery cell 210 gradually decreases, and heat exchange efficiency gradually decreases; and when the heat exchange tube 10 heats the battery assembly 200 for temperature rise, the heat of the heat exchange medium is gradually transferred to the battery cell 210, so that the temperature of the heat exchange medium gradually decreases in the procedure of the heat exchange medium flowing along the first heat exchange tube 102, a temperature difference between the heat exchange medium and the battery cell 210 gradually decreases, and heat exchange efficiency gradually decreases.

In this embodiment, when the heat exchange tube 10 performs heat dissipation and cooling of the battery assembly 200, the heat exchange medium may flow from the first heat exchange flow channel 51 to the second heat exchange flow channel 52, and the heat exchange medium may alternatively flow from the second heat exchange flow channel 52 to the first heat exchange flow channel 51. When the heat exchange medium flows from the first heat exchange flow channel 51 to the second heat exchange flow channel 52, the battery cells 210 at the middle position of the battery 1000 (that is, the internal battery cells 210 on the inner side of the periphery) may be first cooled, and then the battery cells 210 at the peripheral position of the battery 1000 are cooled. Because heat dissipation of the battery cells 210 at the peripheral position of the battery 1000 are better than heat dissipation of the internal battery cells 210, the heat exchange medium with a relatively low temperature in the first heat exchange flow channel 51 can better satisfy heat dissipation requirements of the battery cells 210 at the middle position of the battery 1000. In addition, because the battery cells 210 at the peripheral position can directly and naturally dissipate heat to the external environment, when the temperature of the heat exchange medium in the second heat exchange flow channel 52 is slightly high, heat dissipation requirements of the peripheral battery cells 210 can still be satisfied, so that cooling effects obtained by the battery cells 210 at the peripheral position of the battery 1000 and the battery cells 210 at the middle position of the battery 1000 are substantially the same. As a result, the battery cells 210 at the peripheral position of the battery 1000 and the battery cells 210 at the middle position of the battery 1000 after cooling and heat dissipation have substantially the same temperature, making temperature distribution in the battery 1000 more uniform.

When the heat exchange tube 10 performs heating and temperature rise of the battery assembly 200, the heat exchange medium may flow from the first heat exchange flow channel 51 to the second heat exchange flow channel 52, and the heat exchange medium may alternatively flow from the second heat exchange flow channel 52 to the first heat exchange flow channel 51. For example, when the heat exchange medium flows from the second heat exchange flow channel 52 to the first heat exchange flow channel 51, the heat exchange medium first heats the battery cells 210 on the periphery of the battery assembly 200, and then heats the battery cells 210 at the middle position of the battery assembly 200. Because the battery cells 210 on the periphery of the battery 1000 dissipate relatively much heat to the external environment, the temperature of the battery cells 210 on the periphery of the battery 1000 drops more easily. The heat exchange medium first heats the battery cells 210 on the periphery of the battery 1000, the heat exchange medium with a relatively high temperature can compensate for heat lost by the battery cells 210 due to heat dissipation to the external environment while increasing the temperature of the battery cells 210 on the periphery, thereby satisfying heating requirements of the battery cells 210. The battery cells 210 at the middle position of the battery assembly 200 have a small contact area with the external environment and have less heat loss, the heat exchange medium with a relatively low temperature flowing in the first heat exchange flow channel 51 can well satisfy the heating requirements of the battery cells 210 in cooperation with heat generated by the battery cells 210 themselves, so that heating effects obtained by the battery cells 210 on the periphery of the battery 1000 and the battery cells 210 at the middle position of the battery assembly 200 are substantially the same. As a result, the battery cells 210 on the periphery of the battery 1000 and the battery cells 210 at the middle position of the battery assembly 200 after heating and temperature rise have substantially the same temperature, making temperature distribution in the battery 1000 more uniform.

In the foregoing implementation, the second heat exchange flow channel 52 is bent to form a U-shaped region 50, and the first heat exchange flow channel 51 is bent and disposed in the U-shaped region 50. When the heat exchange tube 10 exchanges heat with the battery assembly 200, the U-shaped region 50 formed by the second heat exchange flow channel 52 on the periphery can be opposite to the peripheral battery cells 210 of the battery, and the first heat exchange flow channel 51 in the U-shaped region 50 can be opposite to the internal battery cells 210, so that the heat exchange tube 10 can compensate for an internal and external temperature difference caused by heat exchange between the peripheral battery cells 210 and the environment to make heat exchange effects of the peripheral battery cells 210 of the battery assembly 200 and the internal battery cells 210 of the battery assembly 200 tend to be the same, improving temperature equalization of the battery 1000, thereby improving a service life of the battery 1000 to some extent.

According to some embodiments of the present application, as shown in FIG. 13, the first heat exchange flow channel 51 may include a plurality of first heat exchange portions 511, and the plurality of first heat exchange portions 511 are arranged at intervals and are sequentially connected in a bent manner.

That is, the plurality of first heat exchange portions 511 are sequentially connected, and a connection position of two connected first heat exchange portions 511 is bent. For example, two connected first heat exchange portions 511 may be connected by means of the bent section 12. The quantity of first heat exchange portions 511 may be two, three, four, five or more.

It should be noted that the shape of the first heat exchange portion 511 may be various, for example, the first heat exchange portion 511 may be linear or arc-shaped. The extension direction of the first heat exchange portion 511 may be various, for example, the first heat exchange portion 511 may extend in the length direction or the thickness direction of the battery cell 210. In this way, the plurality of first heat exchange portions 511 are sequentially connected in a bent manner, so that the first heat exchange flow channel 51 can form a heat exchange flow channel in a form such as an S-shape, a Chinese character 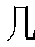 -shape, or a V-shape.

In the foregoing implementation, in one aspect, by providing a plurality of first heat exchange portions 511, the heat exchange area of the first heat exchange flow channel 51 can be increased, and then the heat exchange area of the first heat exchange tube 102 can be increased, thereby improving heat exchange effect of the first heat exchange tube 102; and in the other aspect, the internal battery cells 210 are wrapped by the external battery cells 210, and the temperature difference between the internal battery cells 210 is not large. Therefore, through arrangement of the plurality of first heat exchange portions 511, overall heat exchange effect can be improved on the premise of reducing the temperature difference between internal and external battery cells 210.

According to some embodiments of the present application, as shown in FIG. 13, the plurality of first heat exchange portions 511 are arranged at intervals in the second direction Y, each first heat exchange portion 511 extends linearly in the first direction X, and the first direction X and the second direction Y are disposed at an included angle.

The description that "the first direction X and the second direction Y are disposed at an included angle" is intended to illustrate that the first direction X and the second direction Y may be arranged perpendicularly, or may be arranged in an only-intersecting and non-perpendicular manner. For example, the first direction X and the second direction Y may be arranged at an included angle of 30°, 60°, 80°, 120°, 150°, or 170°. For example, as shown in FIG. 13, the first direction X is the thickness direction of the battery cell 210, the second direction Y is the length direction of the battery cell 210, and the first heat exchange portion 511 extends in the thickness direction of the battery cell 210 and is arranged at intervals in the length direction of the battery cell 210. In this way, the plurality of first heat exchange portions 511 are connected in a bent manner to form an S-shaped heat exchange flow channel, which can achieve heat exchange for the plurality of battery cells 210.

In the foregoing implementation, by arranging the first heat exchange portion 511 to extend linearly in the first direction X, production difficulty of the first heat exchange portion 511 can be reduced, thereby reducing production complexity of the first heat exchange tube 102. In addition, a straight tube can further increase the flow speed of the heat exchange medium, thereby improving heat exchange effect of the first heat exchange tube 102.

According to some embodiments of the present application, as shown in FIG. 13, the second heat exchange flow channel 52 may include: a second heat exchange portion 521, a third heat exchange portion 522, and a fourth heat exchange portion 523, where the second heat exchange portion 521 extends along a first side peripheral edge of the first heat exchange flow channel 51, the third heat exchange portion 522 is connected between the second heat exchange portion 521 and the first heat exchange flow channel 51 and extends along a second side peripheral edge of the first heat exchange flow channel 51, and a first end of the third heat exchange portion 522 is connected to the second heat exchange portion 521 at an included angle and a second end of the third heat exchange portion 522 is connected to the first heat exchange flow channel 51 at an included angle; and the fourth heat exchange portion 523 is communicated with the second heat exchange portion 521, is connected to the second heat exchange portion 521 at an included angle, and extends along a third side peripheral edge of the first heat exchange flow channel 51.

It may be understood that the fourth heat exchange portion 523 is connected to an end that is of the second heat exchange portion 521 and that is away from the third heat exchange portion 522, the fourth heat exchange portion 523, the second heat exchange portion 521, and the third heat exchange portion 522 are sequentially connected to form a U-shaped region 50, and the first heat exchange flow channel 51 is arranged in the U-shaped region 50 and connected to an end that is of the third heat exchange portion 522 and that is away from the second heat exchange portion 521.

The first end of the third heat exchange portion 522 is connected to the second heat exchange portion 521 at an included angle, that is, the third heat exchange portion 522 is connected to the second heat exchange portion 521, and the third heat exchange portion 522 and the second heat exchange portion 521 are not collinear and not parallel, but are arranged at an included angle greater than 0° and less than 180°. For example, the third heat exchange portion 522 and the second heat exchange portion 521 are connected and have an included angle of 30°, 45°, 60°, 90°, 120°, 135°, or 150° therebetween.

The second end of the third heat exchange portion 522 is connected to the first heat exchange flow channel 51 at an included angle. That is, the second end of the third heat exchange portion 522 is connected to the second heat exchange portion 521, and the second end of the third heat exchange portion 522 and the first heat exchange flow channel 51 are arranged at an included angle greater than 0° and less than 180°. For example, the second end of the third heat exchange portion 522 and the first heat exchange flow channel 51 are connected and have an included angle of 30°, 45°, 60°, 90°, 120°, 135°, or 150° therebetween.

The fourth heat exchange portion 523 is communicated with the second heat exchange portion 521 and is connected to the second heat exchange portion 521 at an included angle, that is, the fourth heat exchange portion 523 is connected to the second heat exchange portion 521 and is arranged at an included angle greater than 0° and less than 180°. For example, the fourth heat exchange portion 523 and the second heat exchange portion 521 are connected and have an included angle of 30°, 45°, 60°, 90°, 120°, 135°, or 150° therebetween.

It should be noted that, in this embodiment, it is defined that the second heat exchange flow channel 52 is arranged on three sides of the first heat exchange flow channel 51 in the circumferential direction, and it is not defined that the second heat exchange portion 521, the third heat exchange portion 522, and the fourth heat exchange portion 523 are respectively arranged at specific positions relative to the first heat exchange flow channel 51. Therefore, specific positions of the second heat exchange portion 521, the third heat exchange portion 522, and the fourth heat exchange portion 523 can be designed based on actual conditions. For example, if the second heat exchange portion 521 is arranged on a side of the first heat exchange flow channel 51 in the second direction Y, the third heat exchange portion 522 and the fourth heat exchange portion 523 are respectively arranged on two sides of the first heat exchange flow channel 51 in the first direction X. If the second heat exchange portion 521 is arranged on a side of the first heat exchange flow channel 51 in the first direction X, the third heat exchange portion 522 and the fourth heat exchange portion 523 are respectively arranged on two sides of the first heat exchange flow channel 51 in the second direction Y.

In the foregoing implementation, by respectively arranging the second heat exchange portion 521, the third heat exchange portion 522, and the fourth heat exchange portion 523 on three sides of the first heat exchange flow channel 51, the second heat exchange flow channel 52 can surround the first heat exchange flow channel 51, thereby increasing compactness of arrangement of the first heat exchange tube 102, achieving miniaturization of the structure of the first heat exchange tube 102, and further facilitating improvement of the volumetric energy density of the battery 1000. In addition, the structure of the first heat exchange tube 102 can be simplified, and processing and production of the heat exchange tube 10 can be facilitated.

According to some embodiments of the present application, as shown in FIG. 13, the first heat exchange tube 102 may further include: a third heat exchange flow channel 53, the first heat exchange flow channel 51 is connected between the third heat exchange flow channel 53 and the second heat exchange flow channel 52, and the third heat exchange flow channel 53 is connected to the first heat exchange flow channel 51 at an included angle.

In other words, in the first heat exchange tube 102, the second heat exchange flow channel 52, the first heat exchange flow channel 51, and the third heat exchange flow channel 53 are sequentially connected, and the heat exchange medium may flow from the second heat exchange flow channel 52 to the third heat exchange flow channel 53 through the first heat exchange flow channel 51, or may flow from the third heat exchange flow channel 53 to the second heat exchange flow channel 52 through the first heat exchange flow channel 51.

The third heat exchange flow channel 53 and the first heat exchange flow channel 51 are connected and arranged at an included angle greater than 0° and less than or equal to 180°. For example, the included angle between the third heat exchange flow channel 53 and the first heat exchange flow channel 51 is 30°, 45°, 60°, 90°, 120°, 135°, 150°, or the like.

In the foregoing implementation, by providing the third heat exchange flow channel 53, the heat exchange area of the first heat exchange tube 102 can be further increased, and then the heat exchange effect of the first heat exchange tube 102 can be further improved.

According to some embodiments of the present application, as shown in FIG. 13, the first heat exchange flow channel 51 includes a plurality of first heat exchange portions 511, and the plurality of first heat exchange portions 511 are sequentially connected in the second direction Y. The third heat exchange flow channel 53 is arranged on a side that is of the first heat exchange flow channel 51 and that faces away from the third heat exchange portion 522, and the third heat exchange flow channel 53 is connected to one of the plurality of first heat exchange portions 511 that is closest to the second heat exchange portion 521 in the second direction Y.

Specifically, the third heat exchange flow channel 53 is arranged adjacent to the fourth heat exchange portion 523 and arranged between the fourth heat exchange portion 523 and the first heat exchange portion 511. Therefore, the third heat exchange flow channel 53 is also arranged on the outer side of the first heat exchange flow channel 51 in the circumferential direction. In this way, the heat exchange area of the first heat exchange tube 102 in the circumferential direction can be increased, and heat exchange efficiency of the first heat exchange tube 102 at the peripheral position can be improved.

In addition, the third heat exchange flow channel 53 and the fourth heat exchange portion 523 may be arranged inside and outside on the same side of the first heat exchange flow channel 51, which can further increase the heat exchange area at this position and improve heat exchange efficiency. In addition, because the third heat exchange flow channel 53 and the fourth heat exchange portion 523 are respectively located at two ends of the first heat exchange flow channel 51 in the flow direction of the heat exchange medium, the third heat exchange flow channel 53 and the fourth heat exchange portion 523 can exchange heat with the same region of the battery assembly 200, thereby improving temperature uniformity of the region.

Furthermore, the third heat exchange flow channel 53 is connected to one of the plurality of first heat exchange portions 511 that is closest to the second heat exchange portion 521 in the second direction Y. In this way, when heat exchange is performed with the battery assembly 200, in the first heat exchange tube 102, temperatures of the heat exchange medium in the first heat exchange portion 511 closest to the second heat exchange portion 521 and the heat exchange medium in the third heat exchange flow channel 53, and temperatures of the heat exchange medium in the second heat exchange portion 521 and the fourth heat exchange portion 523 are respectively the relative maximum temperature and the relative minimum temperature in the first heat exchange tube 102, and temperatures of remaining portions are intermediate.

Due to heat dissipation effect of the battery 1000, the edge temperature of the battery 1000 is lower than the middle temperature. Therefore, the second heat exchange portion 521 exchanges heat with the first heat exchange portion 511 closest to the second heat exchange portion 521 in the same region, and the third heat exchange flow channel 53 and the fourth heat exchange portion 523 exchange heat in the same region, thereby further improving temperature uniformity in the battery assembly 200, balancing the temperature difference in the battery assembly 200, and further improving temperature equalization of the battery assembly 200.

In the foregoing implementation, by additionally providing the third heat exchange flow channel 53 and connecting the third heat exchange flow channel 53 to one of the plurality of first heat exchange portions 511 that is closest to the second heat exchange portion 521 in the second direction Y, the heat exchange area can be increased, a temperature difference of the battery assembly 200 can be balanced, and then temperature equalization of the battery assembly 200 can be improved.

According to some embodiments of the present application, as shown in FIG. 13, the third heat exchange flow channel 53 extends toward a direction away from the second heat exchange portion 521 in the second direction Y, and the first heat exchange portion 511 extends in the first direction X, where the first direction X and the second direction Y are disposed at an included angle.

Specifically, one end of the third heat exchange portion 522 is connected to one of the plurality of first heat exchange portions 511 that is farthest from the second heat exchange portion 521 in the second direction Y, the other end of the third heat exchange portion 522 extends toward one first heat exchange portion 511 closest to the second heat exchange portion 521; and in addition, the fourth heat exchange portion 523 also extends toward one first heat exchange portion 511 farthest from the second heat exchange portion 521.

Furthermore, the third heat exchange flow channel 53 is arranged on a side that is of the first heat exchange flow channel 51 and that faces away from the third heat exchange portion 522. In this case, the third heat exchange flow channel 53 and the fourth heat exchange portion 523 are arranged on the same outer side of the first heat exchange portion 511 in the circumferential direction. The third heat exchange flow channel 53 and the fourth heat exchange portion 523 are respectively located at two ends of the first heat exchange flow channel 51 in the fluid flow direction. When the third heat exchange flow channel 53 and the fourth heat exchange portion 523 exchange heat with the same region of the battery assembly 200 together, a temperature difference at the edge position of the battery assembly 200 can be balanced, thereby improving temperature equalization at the edge position of the battery assembly 200.

In the foregoing implementation, by providing the third heat exchange flow channel 53 to extend toward the direction away from the second heat exchange portion 521 in the second direction Y, the heat exchange area of the first heat exchange tube 102 can be increased, and the heat exchange effect of the first heat exchange tube 102 on the battery cells 210 can be improved. In addition, when the third heat exchange flow channel 53 and the fourth heat exchange portion 523 exchange heat with the battery assembly 200 together, a temperature difference in a region of the edge position of the battery assembly 200 can be balanced, thereby improving temperature equalization at the edge position of the battery assembly 200.

As shown in FIG. 3 and FIG. 13, the heat exchange member 100 according to the embodiments of the present application includes the heat exchange tube 10 according to the embodiments of the present application. In some specific embodiments, as shown in FIG. 3 and FIG. 4, the heat exchange member 100 may further include a connector 40, and two ends of the heat exchange tube 10 are separately connected to the connector 40 for connection to other structures, so that the heat exchange medium flows into and out of the heat exchange tube 10.

In some embodiments in which the heat exchange member 100 includes a plurality of heat exchange tubes 10, the heat exchange member 100 may further include a manifold, and the plurality of heat exchange tubes 10 are connected in parallel by means of the manifold.

According to some embodiments of the present application, as shown in FIG. 13 to FIG. 15, the heat exchange member 100 has one or more heat exchange tubes 10. When there are a plurality of heat exchange tubes 10, the plurality of heat exchange tubes 10 are arranged at intervals or arranged in a surrounding manner with each other in the second direction Y. At least one heat exchange tube 10 is formed into the first heat exchange tube 102, and the plurality of heat exchange tubes 10 are arranged in parallel.

It may be understood that the quantity of heat exchange tubes 10 of the heat exchange member 100 may be one, two, three, four or more. When there are a plurality of heat exchange tubes 10, one of the plurality of heat exchange tubes 10 may be formed into the first heat exchange tube 102, or two, three, four or more heat exchange tubes 10 may be formed into the first heat exchange tubes 102, or the plurality of heat exchange tubes 10 may all be formed into the first heat exchange tubes 102.

In some specific embodiments, as shown in FIG. 13, the plurality of heat exchange tubes 10 are arranged at intervals in the second direction Y. For example, as shown in FIG. 13, the heat exchange member 100 may include two heat exchange tubes 10, which are arranged at intervals in the second direction Y. Furthermore, the two heat exchange tubes 10 may both be formed into the first heat exchange tubes 102. For another example, the heat exchange member 100 may include three heat exchange tubes 10, which are sequentially arranged in the second direction Y. Furthermore, two heat exchange tubes 10 located at two ends in the three heat exchange tubes 10 are the first heat exchange tubes 102, and the heat exchange tube 10 located in the middle may have the same structure as the first heat exchange tube 102 or may have a different structure from the first heat exchange tube 102.

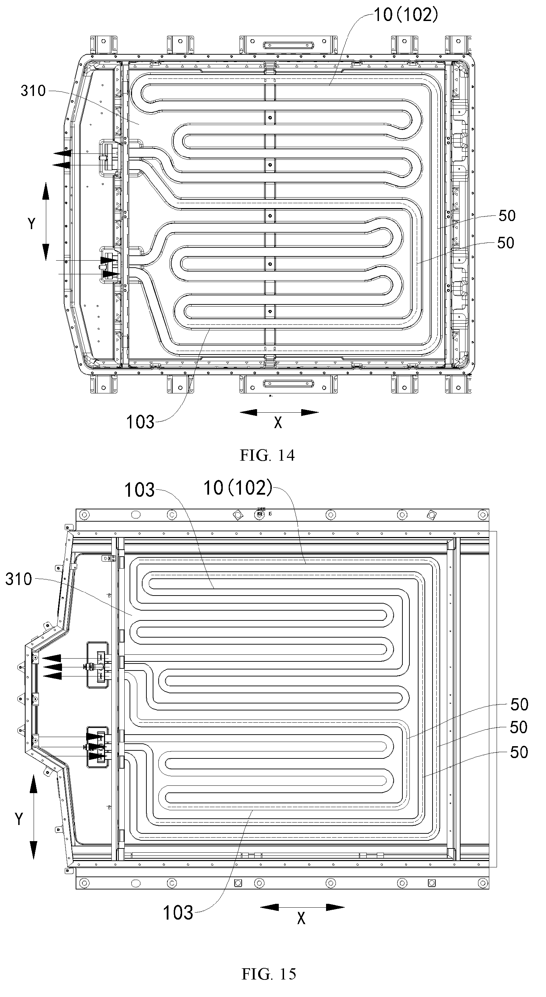

In some other embodiments, the plurality of heat exchange tubes 10 are arranged in a surrounding manner with each other. For example, as shown in FIG. 14, the heat exchange member 100 has two heat exchange tubes 10 arranged in parallel, and the two heat exchange tubes 10 are arranged in a surrounding manner with each other. Furthermore, the two heat exchange tubes 10 may both be formed into the first heat exchange tubes 102. For another example, as shown in FIG. 15, the heat exchange member 100 has three heat exchange tubes 10 arranged in parallel, the three heat exchange tubes 10 are arranged in a surrounding manner with each other, and the three heat exchange tubes 10 may all be formed into the first heat exchange tubes 102.

The plurality of heat exchange tubes 10 are arranged in parallel, that is, inlets of the plurality of heat exchange tubes 10 are connected to the same liquid supply tube, and outlets of the plurality of heat exchange tubes 10 are connected to the same liquid outlet tube.

In the foregoing implementation, the heat exchange member 100 has one or more heat exchange tubes 10, and the plurality of heat exchange tubes 10 are arranged at intervals or arranged in a surrounding manner with each other in the second direction Y, diversity of the heat exchange tubes 10 can be increased, and then adaptability of the heat exchange member 100 can be improved, so that requirements of different batteries 1000 can be satisfied, and market competitiveness of the batteries 1000 can be enhanced. In addition, the plurality of heat exchange tubes 10 are arranged in parallel, so that the plurality of heat exchange tubes 10 can exchange heat simultaneously, thereby reducing heat exchange time of the heat exchange member 100 and improving heat exchange efficiency.

According to some embodiments of the present application, as shown in FIG. 14, the plurality of heat exchange tubes 10 include one first heat exchange tube 102 and one second heat exchange tube 103, the second heat exchange tube 103 and the first heat exchange tube 102 have the same structure, and the second heat exchange tube 103 is bent and disposed in the U-shaped region 50 of the first heat exchange tube 102. In the foregoing implementation, by providing the plurality of heat exchange tubes 10, diversity of the heat exchange tubes 10 can be increased, so that arrangement of the heat exchange tubes 10 can be designed based on cooling requirements of the battery 1000, thereby further improving heat exchange effect of the heat exchange member 100 and improving temperature equalization of the battery 1000.

According to some embodiments of the present application, as shown in FIG. 15, the second heat exchange tube 103 includes a U-shaped region 50 having the same structure as the first heat exchange tube 102, and at least a portion of the first heat exchange flow channel 51 of the first heat exchange tube 102 is disposed in the U-shaped region 50 of the second heat exchange tube 103.

It may be understood that only a portion of the first heat exchange flow channel 51 of the first heat exchange tube 102 is disposed in the U-shaped region 50 of the second heat exchange tube 103, or the whole first heat exchange flow channel 51 of the first heat exchange tube 102 is disposed in the U-shaped region 50 of the second heat exchange tube 103.

For example, as shown in FIG. 15, the plurality of heat exchange tubes 10 include one first heat exchange tube 102 and two second heat exchange tubes 103, and the two second heat exchange tubes 103 have the same structure as the first heat exchange tube 102.

In the foregoing implementation, the second heat exchange tube 103 includes the U-shaped region 50 having the same structure as the first heat exchange tube 102, and at least a portion of the first heat exchange flow channel 51 of the first heat exchange tube 102 is disposed in the U-shaped region 50 of the second heat exchange tube 103, so that at least portions of the first heat exchange tube 102 and the second heat exchange tube 103 can be arranged in a surrounding manner with each other. In this way, the manner of surrounding the heat exchange flow channels can be arranged based on heat exchange requirements of various portions of the battery assembly 200, heat exchange effect of the heat exchange tube 10 is further improved, and temperature equalization of the battery 1000 is improved.

As shown in FIG. 13 to FIG. 15, the battery 1000 according to the embodiments of the present application includes the heat exchange tube 10 according to the embodiments of the present application. Therefore, by using the forgoing heat exchange tube 10, temperature control performance of the battery 1000 can be improved.

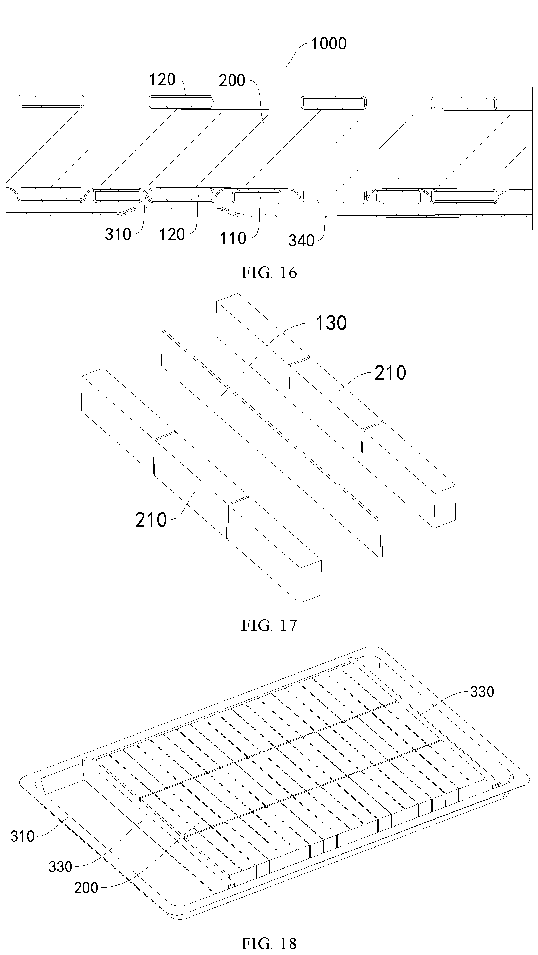

In some embodiments, as shown in FIG. 16 and FIG. 17, the battery 1000 further includes: a box assembly 300 and a battery assembly 200. The box assembly 300 includes a box body 310 integrally formed by means of stamping, the box body 310 includes a bottom wall 311 and a surrounding wall 312, the battery assembly 200 is disposed in the box body 310, and the battery assembly 200 includes a plurality of battery cells 210. For example, the box body 310 may be made of sheet metal and stamped into a basin shape to include the bottom wall 311 and the surrounding wall 312. Therefore, because the bottom wall 311 and the surrounding wall 312 of the box body 310 are integrally formed by means of stamping, sealing effect can be improved without considering sealing at the connection of the bottom wall 311 and the surrounding wall 312, thereby preventing muddy water from seeping into the box body 310 from the connection of the bottom wall 311 and the surrounding wall 312 and affecting the battery assembly 200, thereby improving reliability of the battery 1000. Moreover, the box body 310 integrally formed by means of stamping does not need to be spliced, which can improve production efficiency. The battery cells 210 can generate heat during working, or the battery cells 210 need to be heated in a low temperature environment to make the battery cells 210 within an appropriate temperature range. By providing the heat exchanger tube 10, temperature regulation of the battery cells 210 can be achieved, stability of the battery cells 210 is improved, and endurance capability of the battery 1000 is enhanced.

In some embodiments of the present application, as shown in FIG. 16 to FIG. 18, the battery 1000 includes a temperature-regulating member, the temperature-regulating member includes at least one of a first temperature-regulating member 110, a second temperature-regulating member 120, and a third temperature-regulating member 130, and the at least one of the first temperature-regulating member 110, the second temperature-regulating member 120, and the third temperature-regulating member 130 includes the heat exchange tube 10. The first temperature-regulating member 110 is disposed outside the box body 310 and is in close contact with an outer wall of the box body 310. The second temperature-regulating member 120 is disposed inside the box assembly 300 and is located between the battery assembly 200 and the box assembly 300. The third temperature-regulating member 130 is disposed inside the box assembly 300 and is located between two adjacent battery cells 210.

For example, the battery 1000 may include only one of the first temperature-regulating member 110, the second temperature-regulating member 120, and the third temperature-regulating member 130, or may include two of the first temperature-regulating member 110, the second temperature-regulating member 120, and the third temperature-regulating member 130, or may include all of the first temperature-regulating member 110, the second temperature-regulating member 120, and the third temperature-regulating member 130. Therefore, based on actual conditions, an appropriate position can be selected to provide the temperature-regulating member to satisfy temperature regulation requirements of the battery 1000.

The specific position of the first temperature-regulating member 110 outside the box body 310 is not limited. For example, with reference to FIG. 16, at least a portion of the first temperature-regulating member 110 may be disposed below the bottom wall 311 of the box body 310, so that heat exchange with the battery assembly 200 can be performed within a larger range, and temperature regulating effect on the battery assembly 200 can be improved. For another example, at least a portion of the first temperature-regulating member 110 may alternatively be disposed on the outer side of the surrounding wall 312 of the box body 310.

For example, as shown in FIG. 16, the box assembly 300 may further include a bottom protection plate 340 located below the bottom wall 311 of the box body 310 to protect the box body 310 from bumps and other impacts. In this case, if the first temperature-regulating member 110 is provided below the bottom wall 311 of the box body 310, the first temperature-regulating member 110 may be located between the bottom protection plate 340 and the bottom wall 311 of the box body 310, so that the bottom protection plate 340 can also protect the first temperature-regulating member 110.

The specific position of the second temperature-regulating member 120 in the box assembly 300 is not limited. For example, with reference to FIG. 16, at least a portion of the second temperature-regulating member 120 may be disposed above the bottom wall 311 of the box body 310 to be sandwiched between the bottom wall 311 of the box body 310 and the bottom of the battery assembly 200, so that heat exchange with the battery assembly 200 can be performed within a larger range, and temperature regulating effect on the battery assembly 200 can be improved. For another example, at least a portion of the second temperature-regulating member 120 may be disposed below the box cover 320 to be sandwiched between the box cover 320 and the top of the battery assembly 200, so that heat exchange with the battery assembly 200 can be performed within a larger range, and temperature regulating effect on the battery assembly 200 can be improved.

The specific position of the third temperature-regulating member 130 in the box assembly 300 is not limited. For example, with reference to FIG. 17, large surfaces of adjacent battery cells 210 in the battery assembly 200 may be opposite to each other, and the third temperature-regulating member 130 is disposed between the large surfaces of adjacent battery cells 210, which can improve temperature regulating effect on the battery cells 210.

For example, with reference to FIG. 16, the temperature-regulating member may be a flat tube structure, that is, the temperature-regulating member is formed into a form of a flat tube with the width greater than the thickness. A flow channel may be formed in the flat tube, and heat exchange liquid may be introduced into the flow channel to exchange heat with the battery assembly 200, thereby achieving temperature regulating effect on the battery 1000.

Generally, the heat exchange tube used in the battery is a double-layer brazing plate structure, that is, the heat exchange tube is formed by brazing two layers of plates, and a heat exchange flow channel is formed between the two layers of plates. In the present application, for example, the flat tube may be spliced together from extruded multi-section tubes, and the thickness of the flat tube may be far less than the thickness of the double-layer brazing plate structure, so that a smaller space can be occupied, and the capacity of the battery 1000 can be increased.

In addition, a thermal management system of the battery 1000 is not limited to including only the foregoing temperature-regulating member. For example, in some embodiments, with reference to FIG. 18, the box assembly 300 may further include an expansion beam 330 disposed in the box body 310. For example, there may be a plurality of expansion beams 330, and the battery assembly 200 is sandwiched between the plurality of expansion beams 330. For example, the expansion beam may include a first expansion beam 330 and a second expansion beam 330, and the battery assembly 200 is sandwiched between the first expansion beam 330 and the second expansion beam 330, and a heat exchange flow channel may be provided in the expansion beam 330 for temperature regulation, thereby forming a portion of the thermal management system.

As shown in FIG. 1, the electric apparatus according to the embodiments of the present application includes the battery 1000 according to the embodiments of the present application. The electric apparatus may be any one of the foregoing devices or systems using the battery 1000. Because the performance of the battery 1000 is improved, it is beneficial to enhance working electric performance of the electric apparatus.

It should be noted that, without contradictory, the embodiments in the present application may be combined with the features in the embodiments.

The above descriptions are merely preferred embodiments of the present application, and are not intended to limit the present application. For a person skilled in the art, various modifications and changes may be made to the present application. Any modification, equivalent replacement, or improvement made without departing from the spirit and principle of the present application shall fall within the protection scope of the present application.

## Claims

1. A heat exchange tube, comprising:
a plurality of heat exchange sections, the plurality of heat exchange sections being separately formed, and the plurality of heat exchange sections being sequentially spliced and communicated, wherein
each heat exchange section comprises a bent section and a straight section, two straight sections of any two adjacent heat exchange sections are connected by means of a lap joint structure, the lap joint structure comprises a first insertion portion and a second insertion portion, and the first insertion portion is inserted into the second insertion portion and is connected to the second insertion portion.

2. The heat exchange tube according to claim 1, wherein in the two straight sections connected by means of the lap joint structure, an end portion of one straight section is formed into the first insertion portion, and an end portion of the other straight section is formed into the second insertion portion.

3. The heat exchange tube according to claim 2, wherein the inner peripheral surface of the first insertion portion is coplanar with the inner peripheral surface of a connected heat exchange section, the second insertion portion is formed into a flared section, and the size of the inner peripheral surface of the second insertion portion is greater than the size of the inner peripheral surface of the connected heat exchange section; or the first insertion portion is formed into a constricted section, and the size of the outer peripheral surface of the first insertion portion is less than the size of the outer peripheral surface of a connected heat exchange section, and the outer peripheral surface of the second insertion portion is coplanar with the outer peripheral surface of the connected heat exchange section.

4. The heat exchange tube according to claim 1, further comprising a connecting joint wherein two ends of the connecting joint are respectively connected to end portions of two straight sections of two adjacent heat exchange sections by means of lap joint structures, and one of an end portion of the connecting joint and an end portion of the straight section is formed into the first insertion portion, and the other is formed into the second insertion portion.

5. The heat exchange tube according to claim 4, wherein
in the lap joint structure connecting the straight section and the connecting joint, the first insertion portion is formed into a constricted section and/or the second insertion portion is formed into a flared section; or
the outer peripheral surface of one of the straight section and the connecting joint is coplanar with the outer peripheral surface of a connected first insertion portion, and the inner peripheral surface of the other is coplanar with the inner peripheral surface of a connected second insertion portion.

6. The heat exchange tube according to any one of claims 1 to 5, wherein the outer peripheral surface of the first insertion portion is connected to the inner peripheral surface of the second insertion portion.

7. The heat exchange tube according to any one of claims 1 to 6, wherein the first insertion portion and the second insertion portion are connected by means of welding.

8. The heat exchange tube according to any one of claims 1 to 7, wherein each of the heat exchange sections is integrally formed from a single tube; and/or the heat exchange tube is a flat tube.

9. The heat exchange tube according to any one of claims 1 to 8, wherein the heat exchange section comprises one bent section and two straight sections, and the two straight sections are respectively connected to two ends of the bent section.

10. The heat exchange tube according to claim 9, wherein the two straight sections of the heat exchange section extend in a first direction and are arranged in a second direction, the first direction and the second direction are disposed at an included angle, and in two connected heat exchange sections, one straight section of one heat exchange section is opposite to and connected to one straight section of the other heat exchange section in the first direction.

11. The heat exchange tube according to claim 9 or 10, wherein lengths of two straight sections located at two ends of a splicing path are greater than the length of an intermediate straight section, the two straight sections are parallel to each other and respectively have an inlet and an outlet of the heat exchange tube, and the inlet and the outlet are located at the same end of the two straight sections in the length direction.

12. The heat exchange tube according to any one of claims 1 to 8, wherein the heat exchange tube comprises a plurality of straight sections and at least one bent section that are sequentially communicated, the straight sections extend in a first direction and the plurality of straight sections are arranged at intervals in a second direction, the first direction and the second direction are disposed at an included angle, and the at least one bent section is sequentially connected to and communicated with the plurality of straight sections.

13. The heat exchange tube according to claim 12, wherein the bent section comprises an arc-shaped section and an inclined section the inclined section is connected to the arc-shaped section and one of two adjacent straight sections, and the inclined section is away from the arc-shaped section in the first direction and is inclined toward a direction close to the other of the two adjacent straight sections.

14. The heat exchange tube according to claim 13, wherein
the bent section comprises one arc-shaped section and one inclined section, one end of the inclined section is connected to one end of the arc-shaped section, and the other end of the inclined section and the other end of the arc-shaped section are respectively connected to two adjacent straight sections; or
the bent section comprises one arc-shaped section and two inclined sections, and the two inclined sections are respectively connected to two ends of the arc-shaped section and two adjacent straight sections.

15. The heat exchange tube according to any one of claims 12 to 14, wherein the bent diameter of the inner edge of the bent section is D, and the width of the straight section in the second direction is L, wherein
the spacing between two straight sections of the same heat exchange section in the second direction is 60%D to 70%D; and/or
two straight sections of the heat exchange section are a first straight section and a second straight section, and in two adjacent heat exchange sections, the first straight section of one heat exchange section and the second straight section of the other heat exchange section are opposite in the first direction and connected by means of the lap joint structure, the second straight section of one heat exchange section and the first straight section of the other heat exchange section are respectively located on two sides of the lap joint structure in the second direction, and the spacing between the first straight section and the second straight section located on the two sides of the lap joint structure is 60% (2D + L) to 70% (2D + L).

16. The heat exchange tube according to any one of claims 1 to 15, wherein the heat exchange tube comprises a first heat exchange tube the first heat exchange tube comprises a first heat exchange flow channel and a second heat exchange flow channel the second heat exchange flow channel is bent to form a U-shaped region and the first heat exchange flow channel is bent and disposed in the U-shaped region, and is bent and connected to the second heat exchange flow channel.

17. The heat exchange tube according to claim 16, wherein the first heat exchange flow channel comprises a plurality of first heat exchange portions and the plurality of first heat exchange portions are arranged at intervals and are sequentially bent and connected.

18. The heat exchange tube according to claim 16 or 17, wherein the second heat exchange flow channel comprises: a second heat exchange portion a third heat exchange portion, and a fourth heat exchange portion wherein the second heat exchange portion extends along a first side peripheral edge of the first heat exchange flow channel, the third heat exchange portion is connected between the second heat exchange portion and the first heat exchange flow channel and extends along a second side peripheral edge of the first heat exchange flow channel, a first end of the third heat exchange portion is connected to the second heat exchange portion at an included angle and a second end of the third heat exchange portion is connected to the first heat exchange flow channel at an included angle, and the fourth heat exchange portion is communicated with the second heat exchange portion, is connected to the second heat exchange portion at an included angle, and extends along a third side peripheral edge of the first heat exchange flow channel.

19. The heat exchange tube according to claim 18, wherein the first heat exchange tube further comprises a third heat exchange flow channel the first heat exchange flow channel is connected between the third heat exchange flow channel and the second heat exchange flow channel, and the third heat exchange flow channel is connected to the first heat exchange flow channel at an included angle.

20. The heat exchange tube according to claim 19, wherein the first heat exchange flow channel comprises a plurality of first heat exchange portions, the plurality of first heat exchange portions are sequentially bent and connected in the second direction, the third heat exchange flow channel is arranged on a side that is of the first heat exchange flow channel and that faces away from the third heat exchange portion, the third heat exchange flow channel is connected to one of the plurality of first heat exchange portions that is closest to the second heat exchange portion in the second direction, the third heat exchange flow channel extends in the second direction toward a direction away from the second heat exchange portion, the first heat exchange portion extends in the first direction, and the first direction and the second direction are disposed at an included angle.

21. A battery comprising at least one heat exchange tube according to any one of claims 1 to 20.

22. The battery according to claim 21, comprising a plurality of heat exchange tubes, wherein the plurality of heat exchange tubes are arranged at intervals or arranged in a surrounding manner with each other in a second direction, at least one heat exchange tube is a first heat exchange tube, the first heat exchange tube comprises a first heat exchange flow channel and a second heat exchange flow channel, the second heat exchange flow channel is bent to form a U-shaped region, the first heat exchange flow channel is bent and disposed in the U-shaped region and is bent and connected to the second heat exchange flow channel, and the plurality of heat exchange tubes are arranged in parallel.

23. The battery according to claim 21 or 22, further comprising:
a box assembly and a battery assembly wherein the box assembly comprises a box body integrally formed by means of stamping, the box body comprises a bottom wall and a surrounding wall the battery assembly is disposed in the box body, and the battery assembly comprises a plurality of battery cells.

24. The battery according to claim 23, wherein the battery comprises a temperature-regulating member, the temperature-regulating member comprises at least one of a first temperature-regulating member a second temperature-regulating member and a third temperature-regulating member and the at least one of the first temperature-regulating member, the second temperature-regulating member, and the third temperature-regulating member comprises the heat exchange tube, wherein
the first temperature-regulating member is disposed outside the box body and is in close contact with an outer wall of the box body;
the second temperature-regulating member is disposed inside the box assembly and is located between the battery assembly and the box assembly; and
the third temperature-regulating member is disposed inside the box assembly and is located between two adjacent battery cells.

25. An electric apparatus, comprising the battery according to any one of claims 21 to 24.
